(19) Europäisches Patentamt
European Patent Office
Office européen des brevets

(11) EP 4 462 202 A1

(12) EUROPÄISCHE PATENTANMELDUNG

(43) Veröffentlichungstag:
13.11.2024 Patentblatt 2024/46

(21) Anmeldenummer: 23172628.2

(22) Anmeldetag: 10.05.2023

(51) Internationale Patentklassifikation (IPC):
G05B 19/19 (2006.01)    B23Q 15/24 (2006.01)

(52) Gemeinsame Patentklassifikation (CPC):
G05B 19/19; B23Q 15/24; G05B 19/195;
G05B 2219/34027; G05B 2219/41264

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(72) Erfinder:
• BITTEROLF, David
  91056 Erlangen (DE)
• TAUCHMANN, Sven
  09127 Chemnitz (DE)
• HANSEN, Stephan
  21684 Stade (DE)
• HAMANN, Tobias
  21684 Stade (DE)

(74) Vertreter: Siemens Patent Attorneys
Postfach 22 16 34
80506 München (DE)

(71) Anmelder:
• Siemens Aktiengesellschaft
  80333 München (DE)
• Fraunhofer-Gesellschaft zur Förderung
  der angewandten Forschung e.V.
  80686 München (DE)

(54) REGLERSTRUKTUR FÜR GEMISCHT DIREKTEN/INDIREKTEN ANTRIEB EINES MASCHINENELEMENTS

(57) Auf ein bezüglich einer Achse verstellbares Maschinenelement (4) einer Maschine mit mehreren Achsen wirkt ein erster Antrieb (1) über eine Übersetzungseinrichtung (3) und ein zweiter Antrieb (2) direkt ein. Ein Lageregler (8) nimmt einen Lagesollwert (x*) und einen Lageistwert (x) des Maschinenelements (4) entgegen und ermittelt anhand dieser Größen (x*, x) einen Geschwindigkeitssollwert (v*) für das Maschinenelement (4). Eine erste Ermittlungseinrichtung (11) nimmt den Geschwindigkeitssollwert (v*) entgegen und ermittelt unter Verwendung des Geschwindigkeitssollwerts (v*) einen resultierenden Geschwindigkeitssollwert. Ein erster Geschwindigkeitsregler (12) ermittelt anhand der Differenz des resultierenden Geschwindigkeitssollwerts und des Geschwindigkeitsistwerts (v) des ersten Antriebs (1) einen ersten Kraftsollwert (F1*) und steuert den ersten Antrieb (1) in Abhängigkeit von diesem Kraftsollwert (F1*) an. Ein zweiter Geschwindigkeitsregler (9) ermittelt anhand der Differenz des resultierenden Geschwindigkeitssollwerts und des Geschwindigkeitsistwerts (v) des Maschinenelements (4) einen zweiten Kraftsollwert (F2*) und steuert den zweiten Antrieb (2) in Abhängigkeit von diesem Kraftsollwert (F2*) an.

Die Erfindung zeichnet sich dadurch aus, dass ein zweiter Kraft-Vorsteuerwert (F2V) anhand einer zweiten Achsenträgheit $J_{Mot,ab}$ und eines zweiten Skalierungsfaktors $(1 - \alpha)$ ermittelt wird und ein erster Kraft-Vorsteuerwert (F1V) anhand einer ersten Achsenträgheit $J_{Mot,an}$, der zweiten Achsenträgheit $J_{Mot,ab}$ und eines ersten Skalierungsfaktors ($\alpha$) ermittelt wird.

FIG 3

EP 4 462 202 A1

**Beschreibung**

Die vorliegende Erfindung geht aus von einer Reglerstruktur für einen ersten und einen zweiten Antrieb, wobei der erste Antrieb über eine Übersetzungseinrichtung auf ein Maschinenelement wirkt und der zweite Antrieb direkt auf das Maschinenelement wirkt zur Bewegung des Maschinenelements bezüglich einer Achse, wobei die Regelung des ersten Antriebs mittels eines ersten Kraft-Vorsteuerwertes und die Regelung des zweiten Antriebs mittels eines zweiten Kraft-Vorsteuerwertes erfolgt.

Die vorliegende Erfindung geht insbesondere aus von einer Reglerstruktur für einen ersten und einen zweiten Antrieb, wobei der erste Antrieb über eine Übersetzungseinrichtung auf ein Maschinenelement wirkt und der zweite Antrieb direkt auf das Maschinenelement wirkt,

- wobei die Reglerstruktur einen Lageregler umfasst, der mit einem Lageregeltakt jeweils einen Lagesollwert und einen Lageistwert des Maschinenelements entgegennimmt und den ersten Antrieb in Abhängigkeit von dem jeweiligen Lagesollwert und dem jeweiligen Lageistwert ansteuert,
- wobei die Reglerstruktur einen zweiten Geschwindigkeitsregler umfasst, der mit einem zweiten Geschwindigkeitsregeltakt jeweils die Differenz aus einem resultierenden Geschwindigkeitssollwert und einem Geschwindigkeitsistwert des Maschinenelements entgegennimmt, anhand des jeweiligen resultierenden Geschwindigkeitssollwerts und des jeweiligen Geschwindigkeitsistwerts des Maschinenelements jeweils einen zweiten Kraftsollwert für den zweiten Antrieb ermittelt und den zweiten Antrieb in Abhängigkeit von dem jeweiligen zweiten Kraftsollwert ansteuert,
- wobei die Reglerstruktur eine erste Ermittlungseinrichtung aufweist, die den jeweiligen resultierenden Geschwindigkeitssollwert ermittelt und an den ersten Geschwindigkeitsregler ausgibt,
- wobei der Lageregler anhand der Differenz aus dem jeweiligen Lagesollwert und dem jeweiligen Lageistwert jeweils einen Geschwindigkeitssollwert für das Maschinenelement ermittelt und den jeweiligen Geschwindigkeitssollwert als Ausgangssignal ausgibt,
- wobei die Reglerstruktur einen ersten Geschwindigkeitsregler umfasst, der mit einem ersten Geschwindigkeitsregeltakt jeweils die Differenz aus dem resultierenden Geschwindigkeitssollwert und einem Geschwindigkeitsistwert des ersten Antriebs entgegennimmt, anhand der Differenz aus dem jeweiligen resultierenden Geschwindigkeitssollwert und dem jeweiligen Geschwindigkeitsistwert des ersten Antriebs jeweils einen ersten Kraftsollwert für den ersten Antrieb ermittelt und den ersten Antrieb in Abhängigkeit von dem jeweiligen ersten Kraftsollwert ansteuert,
- wobei die erste Ermittlungseinrichtung den jeweiligen Geschwindigkeitssollwert entgegennimmt und unter Verwendung des jeweiligen Geschwindigkeitssollwerts den resultierenden Geschwindigkeitssollwert ermittelt,
- wobei die erste Ermittlungseinrichtung den jeweiligen resultierenden Geschwindigkeitssollwert zusätzlich zum ersten Geschwindigkeitsregler auch an den zweiten Geschwindigkeitsregler ausgibt.

Die vorliegende Erfindung geht weiterhin aus von einer Steuereinrichtung für einen ersten und einen zweiten Antrieb, wobei der erste Antrieb über eine Übersetzungseinrichtung auf ein Maschinenelement wirkt und der zweite Antrieb direkt auf das Maschinenelement wirkt,

- wobei die Steuereinrichtung eine übergeordnete Steuerung und eine Reglerstruktur aufweist,
- wobei die übergeordnete Steuerung der Reglerstruktur mit einem Lageregeltakt Lagesollwerte vorgibt,
- wobei die Reglerstruktur so wie oben erläutert ausgebildet ist.

Die vorliegende Erfindung geht weiterhin aus von einer Maschine,

- wobei die Maschine ein Maschinenelement, einen ersten Antrieb, einen zweiten Antrieb und eine Übersetzungseinrichtung aufweist,
- wobei der erste Antrieb über die Übersetzungseinrichtung auf das Maschinenelement wirkt und der zweite Antrieb direkt auf das Maschinenelement wirkt,
- wobei der erste Antrieb und der zweite Antrieb von einer derartigen Steuereinrichtung gesteuert werden.

Die vorliegende Erfindung geht ferner aus von einem Verfahren zur Regelung einer Antriebseinheit mit einem ersten und einem zweiten Antrieb, wobei der erste Antrieb über eine Übersetzungseinrichtung auf ein Maschinenelement wirkt und der zweite Antrieb direkt auf das Maschinenelement wirkt zur Bewegung des Maschinenelements bezüglich einer Achse, wobei die Regelung des ersten Antriebs mittels eines ersten Kraft-Vorsteuerwertes und die Regelung des zweiten Antriebs mittels eines zweiten Kraft-Vorsteuerwertes erfolgt.

Die vorliegende Erfindung geht insbesondere aus von einem Verfahren zur Regelung einer Antriebseinheit mit einem ersten und einem zweiten Antrieb, wobei der erste Antrieb über eine Übersetzungseinrichtung auf ein Maschinenelement wirkt und der zweite Antrieb direkt auf das Maschinenelement wirkt zur Bewegung des Maschinenelements bezüglich einer Achse,

- wobei ein Lageregler mit einem Lageregeltakt jeweils die Differenz aus einem Lagesollwert und einem Lageistwert des Maschinenelements entgegennimmt und den ersten Antrieb in Abhängigkeit von dem jeweiligen Lagesollwert und dem jeweiligen Lageistwert ansteuert,

- wobei ein zweiter Geschwindigkeitsregler mit einem zweiten Geschwindigkeitsregeltakt jeweils die Differenz aus einem resultierenden Geschwindigkeitssollwert und einem Geschwindigkeitsistwert des Maschinenelements entgegennimmt, anhand des jeweiligen resultierenden Geschwindigkeitssollwerts und des jeweiligen Geschwindigkeitsistwerts des Maschinenelements jeweils einen zweiten Kraftsollwert für den zweiten Antrieb ermittelt und den zweiten Antrieb in Abhängigkeit von dem jeweiligen zweiten Kraftsollwert ansteuert,
- wobei eine erste Ermittlungseinrichtung den jeweiligen resultierenden Geschwindigkeitssollwert ermittelt und an den ersten Geschwindigkeitsregler ausgibt,
- wobei der Lageregler anhand der Differenz aus dem jeweiligen Lagesollwert und dem jeweiligen Lageistwert jeweils einen Geschwindigkeitssollwert für das Maschinenelement ermittelt und den jeweiligen Geschwindigkeitssollwert als Ausgangssignal ausgibt,
- wobei ein erster Geschwindigkeitsregler mit einem ersten Geschwindigkeitsregeltakt jeweils die Differenz aus dem resultierenden Geschwindigkeitssollwert und einem Geschwindigkeitsistwert des ersten Antriebs entgegennimmt, anhand der Differenz aus dem jeweiligen resultierenden Geschwindigkeitssollwert und dem jeweiligen Geschwindigkeitsistwert des ersten Antriebs jeweils einen ersten Kraftsollwert für den ersten Antrieb ermittelt und den ersten Antrieb in Abhängigkeit von dem jeweiligen ersten Kraftsollwert ansteuert,
- wobei die erste Ermittlungseinrichtung den jeweiligen Geschwindigkeitssollwert entgegennimmt und unter Verwendung des jeweiligen Geschwindigkeitssollwerts den resultierenden Geschwindigkeitssollwert ermittelt,
- wobei die erste Ermittlungseinrichtung den jeweiligen resultierenden Geschwindigkeitssollwert zusätzlich zum ersten Geschwindigkeitsregler auch an den zweiten Geschwindigkeitsregler ausgibt.

Maschinenachsen bestehen in der Regel aus einem Antrieb, einer Übersetzungseinrichtung und einem Maschinenelement. Der Antrieb wirkt in diesem Fall über die Übersetzungseinrichtung auf das Maschinenelement. Nachteilig ist bei dieser Anordnung, dass die Übersetzungseinrichtung eine relativ niedrige Steifigkeit aufweist und daher zumindest die Dynamik, in vielen Fällen auch die Positioniergenauigkeit des Maschinenelements relativ niedrig ist.

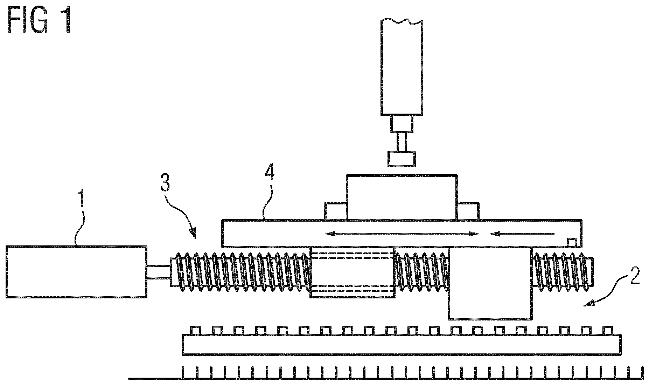

Durch diese Erfindung sind insbesondere Maschinenachsen adressiert, in denen das Antriebssystem einen Servo-Motor mit klassischem Antriebsstrang (KGT, Getriebe, usw.) und gleichzeitig einen Direktantrieb umfasst (siehe FIG 1). Eine solche Antriebsanordnung differenziert sich von der klassischen Master-Slave-Anordnung mit symmetrischen Antriebssträngen, indem der Kraftsollwert nicht streng anteilig aufgeteilt wird, sondern je nach Aufgabe.

Diese Anordnung bietet den Vorteil, die Vorzüge beider Antriebsarten (direkt und indirekt) kombinieren zu können.

- Der Direktantrieb ist nah an der Last und kann für die Übertragung von hochfrequenten Kraftanteilen verwendet werden. Der lastnahe Direktantrieb kann für die Dämpfung prozessnaher Schwingformen benutzt werden.
- Durch die hohe Übersetzung kann der "günstig" ausgelegte Servomotor mit wenig Bauraum und Leistung hohe statische und quasi-statische Belastungen ausgleichen.

Das Ziel dieser Antriebskonstellation ist die Steigerung der Achsdynamik. Es soll dabei möglich sein,

- mit gleichbleibender Qualität einen höheren Ruck und/oder eine höhere Beschleunigung zu fahren und somit die Produktivität zu steigern,
- oder bei gleichbleibender Dynamik die Schwingungsneigung zu reduzieren und somit die Qualität der Bewegung zu steigern,
- oder die Qualität/Bahngenauigkeit zu erhöhen bei gleichzeitiger Steigerung der Dynamik.

In einer häufig anzutreffenden Ausführung wird eine indirekt über z.B. eine Kugelrollspindel oder ein Getriebe angetriebene Achse durch einen Direktantrieb auf der Lastseite ergänzt. Bei Linearachsen wird dazu ein Linearmotor eingesetzt, bei Rundachsen (Rotationsachsen) kommt ein Torquemotor zum Einsatz.

Das Problem dieser Antriebsmischung ist in erster Linie die Komplexität der Integration des Direktantriebs auf Grund der Größe des Motors und die aufwändige Kühlung. Weiterhin sind die Kosten für den Direktantrieb im Vergleich zum indirekten Antrieb sehr hoch. Wird dieser Ansatz beispielsweise für die 3 Hauptachsen eines Roboters gewählt, entstehen erhebliche Zusatzkosten, die die Anlage trotz des Mehrwerts durch die Steigerung der Dynamik in ihrer Wettbewerbsfähigkeit einschränkt.

Aus der EP 2 174 748 A1 sind eine Reglerstruktur, eine Steuereinrichtung und eine Maschine der eingangs genannten Art bekannt. Bei dieser Ausgestaltung der Maschinenachse ist es bei geeigneter Auslegung der Ansteuerung des ersten Antriebs und des zweiten Antriebs möglich, das Maschinenelement mit hoher Dynamik und hoher Positioniergenauigkeit zu positionieren. Insbesondere kann der erste Antrieb zur Übertragung von hochfrequenten Kraftanteilen und zur Dämpfung prozessnaher Schwingungen genutzt werden, während der zweite Antrieb hohe statische und niederfrequente Belastungen übernehmen kann. Über die nähere Ausgestaltung der Reglerstruktur ist der EP 2 174 748 A1 hingegen nichts zu entnehmen.

Aus der US 2010/0 171 458 A1 ist eine Reglerstruktur für einen ersten und einen zweiten Antrieb bekannt, wobei der erste Antrieb und der zweite Antrieb über eine jeweilige Übersetzungseinrichtung auf das Maschinenelement wirken, wobei die Reglerstruktur einen Lageregler umfasst, der mit einem Lageregeltakt jeweils einen Lagesollwert und einen Lageistwert des Maschinenelements entgegennimmt und den zweiten Antrieb in Abhängigkeit von dem jeweiligen Lagesollwert und dem jeweiligen Lageistwert ansteuert, wobei die Reglerstruktur einen ersten Geschwindigkeitsregler umfasst, der mit einem ersten Geschwindigkeitsregeltakt jeweils die Differenz aus einem resultierenden Geschwindigkeitssollwert und einem Geschwindigkeitsistwert des Maschinenelements entgegennimmt, anhand des jeweiligen resultierenden Geschwindigkeitssollwerts und des jeweiligen Geschwindigkeitsistwerts des Maschinenelements jeweils einen zweiten Kraftsollwert für den ersten Antrieb ermittelt und den ersten Antrieb in Abhängigkeit von dem jeweiligen zweiten Kraftsollwert ansteuert, wobei die Reglerstruktur eine erste Ermittlungseinrichtung aufweist, die den jeweiligen resultierenden Geschwindigkeitssollwert ermittelt und an den ersten Geschwindigkeitsregler ausgibt, wobei der Lageregler anhand des jeweiligen Lagesollwerts und des jeweiligen Lageistwerts jeweils einen Geschwindigkeitssollwert für das Maschinenelement ermittelt und den jeweiligen Geschwindigkeitssollwert als Ausgangssignal ausgibt, wobei die Reglerstruktur einen zweiten Geschwindigkeitsregler umfasst, der mit einem zweiten Geschwindigkeitsregeltakt jeweils die Differenz aus dem vom Lageregler ausgegebenen Geschwindigkeitssollwert und dem Geschwindigkeitsistwert des zweiten Antriebs entgegennimmt, anhand dieses Geschwindigkeitssollwerts und des jeweiligen Geschwindigkeitsistwerts des zweiten Antriebs jeweils einen ersten Kraftsollwert für den zweiten Antrieb ermittelt und den zweiten Antrieb in Abhängigkeit von dem jeweiligen ersten Kraftsollwert ansteuert.

Der DE 10 2014 005 664 B3 ist ein im Wesentlichen gleichgelagerter Sachverhalt zu entnehmen.

Aus der EP 2 954 986 A1 ist eine Vorrichtung zum Steuern und Regeln eines Systems mit mehreren, kinematisch zusammenwirkenden Einzelkörpern bekannt, von denen mindestens einer von einem Antrieb bewegt wird. Dabei sind eine Lastrecheneinrichtung zum Berechnen je eines Kraftvektors für jeden der Einzelkörper in Abhängigkeit von vorgegebenen Sollkoordinaten fortlaufend während der Bewegung des Systems und eine Momentrecheneinrichtung zum Berechnen mindestens einer die Kraftvektoren kompensierenden Ausgleichsgröße auf der Basis der Sollkoordinaten und der Kraftvektoren fortlaufend während der Bewegung vorgesehen. Außerdem verfügt die bekannte Vorrichtung zum Steuern und Regeln über eine Regelungseinheit zum Regeln einer kraftbildenden Größe für den mindestens einen Antrieb in Abhängigkeit von den Sollkoordinaten und dem mindestens einen Ausgleichsdrehmoment fortlaufend während der Bewegung.

Aus der EP 3 625 628 A1 ist ein Antrieb für ein Maschinenelement bekannt, bei dem ein erster Antrieb, z.B. ein Getriebemotor, über eine Übersetzungseinrichtung, direkt und ein zweiter Antrieb, z.B. ein Torquemotor, direkt auf das Maschinenelement wirkt. Ein Lageregler nimmt einen Lagesollwert und einen Lageistwert des Maschinenelements entgegen und ermittelt anhand dieser Größen einen Geschwindigkeitssollwert für das Maschinenelement. Eine erste Ermittlungseinrichtung nimmt den Geschwindigkeitssollwert entgegen und ermittelt unter Verwendung des Geschwindigkeitssollwerts einen resultierenden Geschwindigkeitssollwert. Ein erster Geschwindigkeitsregler ermittelt anhand der Differenz aus dem resultierenden Geschwindigkeitssollwert und dem Geschwindigkeitsistwert des ersten Antriebs einen ersten Kraftsollwert und steuert den ersten Antrieb in Abhängigkeit von diesem Kraftsollwert an. Ein zweiter Geschwindigkeitsregler ermittelt anhand der Differenz aus dem resultierenden Geschwindigkeitssollwert und dem Geschwindigkeitsistwerts des Maschinenelements einen zweiten Kraftsollwert und steuert den zweiten Antrieb in Abhängigkeit von diesem Kraftsollwert an. Die bekannte Reglerstruktur umfasst ferner eine zweite Ermittlungseinrichtung, die mit einem Vorsteuertakt jeweils einen Beschleunigungs-Vorsteuerwert entgegennimmt und daraus in Verbindung mit einem Hochpass- und einem Tiefpass-Filter einen ersten Kraft-Vorsteuerwert für den ersten Antrieb und einen zweiten Kraft-Vorsteuerwert für den zweiten Antrieb liefert.

Die Aufgabe der vorliegenden Erfindung besteht darin, eine Reglerstruktur für eine Achse mit mehreren Antrieben zu schaffen, die es erlaubt, die Antriebe kostenoptimiert zu dimensionieren.

Die Aufgabe wird durch eine Reglerstruktur mit den Merkmalen des Anspruchs 1 gelöst. Vorteilhafte Ausgestaltungen der Reglerstruktur sind Gegenstand der abhängigen Ansprüche 2 bis 8.

Erfindungsgemäß wird eine Reglerstruktur der eingangs genannten Art dadurch ausgestaltet,
dass eine dritte Ermittlungseinrichtung, die eine erste Trägheitsermittlungseinrichtung umfasst, die eine erste Achsenträgheit ermittelt, wobei die dritte Ermittlungseinrichtung eine zweite Trägheitsermittlungseinrichtung umfasst, die eine zweite Achsenträgheit ermittelt und wobei die erste Achsenträgheit und/oder die zweite Achsenträgheit jeweils in unterschiedlicher, insbesondere einstellbarer Gewichtung in die Bestimmung des ersten Kraft-Vorsteuerwertes und des zweiten Kraft-Vorsteuerwertes eingehen.

Erfindungsgemäß wird eine Reglerstruktur der eingangs genannten Art insbesondere dadurch ausgestaltet,

dass die Reglerstruktur eine dritte Ermittlungseinrichtung aufweist, die mit einem Vorsteuertakt jeweils einen Beschleunigungs-Vorsteuerwert entgegennimmt, anhand des jeweiligen Beschleunigungs-Vorsteuerwerts einen jeweiligen zweiten Kraft-Vorsteuerwert für den zweiten Antrieb ermittelt und den jeweiligen zweiten Kraft-Vorsteuerwert an eine zweite Additionseinrichtung ausgibt, welche den jeweiligen zweiten Kraft-Vorsteuerwert zum jeweiligen zweiten Kraftsollwert addiert, so dass der zweite Antrieb entsprechend der Summe des jeweiligen zweiten Kraft-Vorsteuerwerts und des jeweiligen zweiten Kraftsollwerts angesteuert wird,

wobei die dritte Ermittlungseinrichtung anhand des jeweiligen vorläufigen Kraft-Vorsteuerwerts einen jeweiligen ersten Kraft-Vorsteuerwert für den ersten Antrieb ermittelt und den jeweiligen ersten Kraft-Vorsteuerwert an eine erste Additionseinrichtung ausgibt, welche den jeweiligen ersten Kraft-Vorsteuerwert zum jeweiligen ersten Kraftsollwert addiert, so dass der erste Antrieb entsprechend der Summe des jeweiligen ersten Kraft-Vorsteuerwerts und des jeweiligen ersten Kraftsollwerts angesteuert wird,

wobei die dritte Ermittlungseinrichtung eine erste Trägheitsermittlungseinrichtung umfasst, die eine erste Achsenträgheit ermittelt,

wobei die dritte Ermittlungseinrichtung eine zweite Trägheitsermittlungseinrichtung umfasst, die eine zweite Achsenträgheit ermittelt,

wobei der jeweilige erste Kraft-Vorsteuerwert anhand der Motorträgheit, der ersten Achsenträgheit, der zweiten Achsenträgheit und eines ersten Skalierungsfaktors ermittelt wird und

wobei der jeweilige zweite Kraft-Vorsteuerwert anhand der zweiten Achsenträgheit und eines zweiten Skalierungsfaktors ermittelt wird.

Durch die Ermittlung des resultierenden Geschwindigkeitssollwerts in Abhängigkeit von sowohl dem Lagesollwert als auch dem Lageistwert - insbesondere in Abhängigkeit von der Differenz von Lagesollwert und Lageistwert - kann insbesondere erreicht werden, dass der erste Antrieb auch bei Störungen, die sich im Lagesollwert nicht bemerkbar machen, mit hoher Dynamik die Korrektur derartiger Störungen unterstützt.

Die Erfindung sieht vor, dass die Reglerstruktur eine dritte Ermittlungseinrichtung aufweist, die mit einem Vorsteuertakt jeweils einen Beschleunigungs-Vorsteuerwert entgegennimmt, anhand des jeweiligen Beschleunigungs-Vorsteuerwerts einen jeweiligen zweiten Kraft-Vorsteuerwert für den zweiten Antrieb ermittelt und den jeweiligen zweiten Kraft-Vorsteuerwert an eine zweite Additionseinrichtung ausgibt, welche den jeweiligen zweiten Kraft-Vorsteuerwert zum jeweiligen zweiten Kraftsollwert addiert, so dass der zweite Antrieb entsprechend der Summe des jeweiligen zweiten Kraft-Vorsteuerwerts und des jeweiligen zweiten Kraftsollwerts angesteuert wird.

Durch diese Ausgestaltung kann die Dynamik bei der Positionierung des Maschinenelements insbesondere bei Änderungen des Lagesollwertes - die in der Regel vorab bekannt sind - verbessert werden.

Die Erfindung sieht weiterhin vor, dass die dritte Ermittlungseinrichtung der Reglerstruktur anhand des jeweiligen vorläufigen Kraft-Vorsteuerwerts - zusätzlich zum jeweiligen zweiten Kraft-Vorsteuerwert - auch einen jeweiligen ersten Kraft-Vorsteuerwert für den ersten Antrieb ermittelt. Dabei gibt die dritte Ermittlungseinrichtung den jeweiligen ersten Kraft-Vorsteuerwert an eine erste Additionseinrichtung aus, welche den jeweiligen ersten Kraft-Vorsteuerwert zum jeweiligen ersten Kraftsollwert addiert, so dass der erste Antrieb entsprechend der Summe des jeweiligen ersten Kraft-Vorsteuerwerts und des jeweiligen ersten Kraftsollwerts angesteuert wird.

Dadurch kann die vom ersten Antrieb erreichte Dynamik beim Positionieren des Maschinenelements gesteigert werden, so dass die resultierende Belastung des zweiten Antriebs reduziert wird.

Die Erfindung sieht vor, dass die Achsenträgheit der betreffenden Achse bei der Ermittlung der Kraft-Vorsteuerwerte berücksichtigt werden, die Ermittlung der Kraft-Vorsteuerwerte also in Abhängigkeit der jeweiligen Achsenträgheit erfolgt.

In der EP2954986A1 wird erklärt, wie aus einem Modell der Maschine in Abhängigkeit der Pose und der Beladung zu jedem Zeitpunkt die Gesamtträgheit (auch als Achsengesamtträgheit oder kurz Achsenträgheit bezeichnet) $J_{Mot}$ aus Sicht jeder Achse ermittelt werden kann. Besonders hervorzuheben ist dabei, dass die Ermittlung der Achsenträgheiten dynamisch während der Bewegung des Systems (der Maschine), insbesondere in einem Takt der Reglerstruktur erfolgt.

Allgemein ist die sogenannte Achsenträgheit $J_{Mot}$ die (Gesamt-) Trägheit aller von dem Antrieb bewegten Komponenten (einschließlich der Trägheit des Antriebs selbst). Sie resultiert aus der Summe der Trägheiten der einzelnen bewegten Komponenten der Maschine (bezogen auf die Achse) und kann somit in der Regel aus Daten des Herstellers der Maschine bzw. des Roboters gewonnen werden.

In die Achsenträgheit $J_{Mot}$ gehen - neben den beweglichen Teilen des Antriebs selbst - alle Elemente der Maschine ein, die von dem Antrieb bewegt werden, also in der kinematischen Kette dem betreffenden Antrieb nachfolgen. Für diese Elemente gibt es in der Regel seitens des Maschinenbauers Angaben zum Trägheitsmoment bzw. Angaben, aus denen das Trägheitsmoment ermittelt werden kann (geometrische Abmessungen, Masse, Schwerpunkt etc.).

Die Erfindung geht aus von einer Achse mit einer Antriebseinheit, die zwei Antriebe umfasst, wobei der erste Antrieb (Getriebemotor) über eine Übersetzungseinrichtung (Getriebe) auf das Maschinenelement wirkt und der zweite Antrieb (Direktantrieb, Torquemotor) direkt auf das Maschinenelement wirkt.

Die Erfindung geht ferner aus von einem Antriebsmodell, bei dem die Steifigkeit des Antriebsstrangs, insbesondere des Getriebes, durch eine Feder mit einer bestimmten Federsteifigkeit modelliert wird.

Die Achsenträgheit $J_{Mot}$ wird nun unterteilt in eine auf die Getriebeantriebseite der Antriebseinheit bezogene, erste Achsenträgheit $J_{Mot,an}$ und eine auf die Getriebeabtriebseite des Antriebsstrangs bezogene, zweite Achsenträgheit $J_{Mot,ab}$.

Erfindungsgemäß umfasst eine dritte Ermittlungseinrichtung der Reglerstruktur eine erste Trägheitsermittlungseinrichtung, die für die betreffende Achse die auf die Getriebeantriebseite der Antriebseinheit bezogene, erste Achsenträgheit $J_{Mot,an}$ ermittelt. $J_{Mot,an}$ umfasst wenigstens im Wesentlichen die Trägheiten des ersten Antriebes (des Getriebemotors) und der Übersetzungseinrichtung (des Getriebes) sowie ggf. weiterer Komponenten wie eine Getriebevorstufe.

Weiterhin umfasst die dritte Ermittlungseinrichtung eine zweite Trägheitsermittlungseinrichtung, die für die betreffende Achse die auf die Getriebeabtriebseite der Antriebseinheit bezogene, zweite Achsenträgheit $J_{Mot,ab}$ ermittelt. $J_{Mot,ab}$ umfasst die Trägheit des zweiten Antriebes (Torquemotors) und der "Last", wobei die Last alle mechanischen Komponenten umfasst, die sich entlang der kinematischen Kette der Maschine an den zweiten Antrieb anschließen, also von diesem bewegt werden.

Es gilt der Zusammenhang:

$$J_{Mot} = J_{Mot,an} + J_{Mot,ab} / i^2$$

wobei i die Übersetzung des Getriebes ist.

Vorteilhaft gehen die erste Achsenträgheit ($J_{Mot,an}$) und/oder die zweite Achsenträgheit ($J_{Mot,ab}$) jeweils in unterschiedlicher, insbesondere einstellbarer Gewichtung in die Bestimmung des ersten Kraft-Vorsteuerwertes (F1V) und des zweiten Kraft-Vorsteuerwertes (F2V) ein.

Insbesondere hängt wenigstens einer der beiden Kraft-Vorsteuerwerte F1V, F2V sowohl von der ersten als auch von der zweiten Achsenträgheit ab.

Vorteilhaft werden erfindungsgemäß der jeweilige zweite Kraft-Vorsteuerwert (F2V) anhand der zweiten Achsenträgheit $J_{Mot,ab}$ und eines zweiten Skalierungsfaktors und der jeweilige erste Kraft-Vorsteuerwert anhand der ersten Achsenträgheit $J_{Mot,an}$, der zweiten Achsenträgheit $J_{Mot,ab}$ und eines ersten Skalierungsfaktors ermittelt.

In einer bevorzugten Ausgestaltung der Reglerstruktur ist vorgesehen, dass die erste Ermittlungseinrichtung weiterhin einen jeweiligen Geschwindigkeits-Vorsteuerwert entgegennimmt und den jeweils resultierenden Geschwindigkeitssollwert als Summe des jeweiligen Geschwindigkeitssollwerts und des jeweiligen Geschwindigkeit-Vorsteuerwerts ermittelt. Durch diese Ausgestaltung kann die Dynamik bei der Positionierung des Maschinenelements noch weiter verbessert werden.

Der sogenannte Intalk-Effekt resultiert aus der Tiefpasswirkung des Antriebsstrangs. Damit eine Bewegung des Motors bis zur Last übertragen wird, muss zunächst - im Masse-Feder-Modell des Antriebsstrangs - die "Antriebsstrangfeder" verspannt werden. Damit wird in der Feder erst genug Drehmoment gespeichert, um die Lastträgheit in Bewegung zu setzen. Die Zeit, in welcher sich die Feder aufspannt, kann mit Hilfe einer Ausgleichsbewegung des Motors verkürzt werden. Diese Bewegung ist proportional zur Beschleunigung, Lastträgheit und Federsteifigkeit. Diese sogenannte "Intalk-Kompensation" weist in der Regel einen starken Hochpasscharakter auf und verursacht harte Kraftspitzen im mechanischen System. Um diese Spitzen zu glätten, kann beispielsweise die Kompensation durch einen Tiefpassfilter geführt werden.

In einer bevorzugten Ausgestaltung der Reglerstruktur ist vorgesehen, dass zur Kompensation des Intalk-Effekts eine erste Intalk-Kompensations-Ermittlungseinrichtung vorgesehen ist, die den Geschwindigkeits-Vorsteuerwert entgegennimmt und einen kompensierten Geschwindigkeits-Vorsteuerwert ermittelt. Dieser wird vorteilhaft gegebenenfalls noch mit der Getriebeübersetzung multipliziert, bevor der so ermittelte Wert ebenfalls dem Geschwindigkeitsregler zugeführt wird.

In einer weiteren bevorzugten Ausgestaltung der Reglerstruktur ist vorgesehen, dass zur Kompensation des Intalk-Effekts ferner eine zweite Intalk-Kompensations-Ermittlungseinrichtung vorgesehen ist, die den Ausgangswert des dritten Anpassblocks entgegennimmt und - gegebenenfalls nach einer Multiplikation mit der Getriebeübersetzung - einen kompensierten ersten Kraft-Vorsteuerwert ermittelt.

Die Aufgabe wird weiterhin durch eine Steuereinrichtung mit den Merkmalen des Anspruchs 9 gelöst. Erfindungsgemäß ist die Reglerstruktur der Steuereinrichtung als erfindungsgemäße Reglerstruktur ausgebildet.

Die Aufgabe wird weiterhin durch eine Maschine mit den Merkmalen des Anspruchs 10 gelöst. Eine vorteilhafte Ausgestaltung der Maschine ist Gegenstand der abhängigen Ansprüche 11 und 12.

Erfindungsgemäß werden der erste Antrieb und der zweite Antrieb von einer erfindungsgemäßen Steuereinrichtung gesteuert.

In der bevorzugten Ausgestaltung der Maschine ist die Maschine als Werkzeugmaschine, als Produktionsmaschine oder als Roboter ausgebildet.

Erfindungsgemäß sieht ein Verfahren der eingangs genannten Art vor, dass eine erste Achsenträgheit ermittelt wird und eine zweite Achsenträgheit ermittelt wird, wobei die erste Achsenträgheit und/oder die zweite Achsenträgheit jeweils in unterschiedlicher, insbesondere einstellbarer Gewichtung in die Bestimmung des ersten Kraft-Vorsteuerwertes und des zweiten Kraft-Vorsteuerwertes eingehen.

Insbesondere sieht ein Verfahren der eingangs genannten Art erfindungsgemäß vor, dass die erste Ermittlungseinrichtung den jeweiligen Geschwindigkeitssollwert entgegennimmt und unter Verwendung des jeweiligen Geschwindigkeitssollwerts den resultierenden Geschwindigkeitssollwert ermittelt,

- wobei die erste Ermittlungseinrichtung den jeweiligen resultierenden Geschwindigkeitssollwert zusätzlich zum ersten Geschwindigkeitsregler auch an den zweiten Geschwindigkeitsregler ausgibt,
- wobei die dritte Ermittlungseinrichtung anhand des jeweiligen vorläufigen Kraft-Vorsteuerwerts einen jeweiligen ersten Kraft-Vorsteuerwert für den ersten Antrieb ermittelt und den jeweiligen ersten Kraft-Vorsteuerwert an eine erste Additionseinrichtung ausgibt, welche den jeweiligen ersten Kraft-Vorsteuerwert zum jeweiligen ersten Kraftsollwert addiert, so dass der erste Antrieb entsprechend der Summe des jeweiligen ersten Kraft-Vorsteuerwerts und des jeweiligen ersten Kraftsollwerts angesteuert wird,
- wobei der jeweilige erste Kraft-Vorsteuerwert anhand der ersten Achsenträgheit, der zweiten Achsenträgheit und eines ersten Skalierungsfaktors ermittelt wird und
- wobei der jeweilige zweite Kraft-Vorsteuerwert anhand der zweiten Achsenträgheit und eines zweiten Skalierungsfaktors ermittelt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1 ein Beispiel einer Maschine,

FIG 2 eine Reglerstruktur mit Steuerung gemäß dem Stand der Technik,

FIG 3 eine Reglerstruktur mit Steuerung gemäß der Erfindung,

FIG 4 eine mögliche Ausgestaltung der Reglerstruktur gemäß FIG 3,

FIG 5-6 das Positionierverhalten in Abhängigkeit eines Skalierungsfaktors $\alpha$,

FIG 7-8 das Positionierverhalten in Abhängigkeit eines Skalierungsfaktors $\alpha$ und eines begrenzten Drehmoments,

FIG 9 eine Reglerstruktur mit einer Intalk-Kompensation,

FIG 10 einen Intalk-Effekt,

FIG 11 Eine mögliche Ausführungsform einer Intalk-Kompensations-Ermittlungseinrichtung,

FIG 12 das Positionierverhalten mit einer Intalk-Kompensation,

FIG 13 den Drehmomentverlauf mit einer Intalk-Kompensation.

Gemäß den FIG 1 bis 3 weist eine Maschine ein Maschinenelement 4 auf. Das Maschinenelement 4 kann beispielsweise entsprechend der Darstellung in FIG 1 ein Werkstücktisch sein. In diesem Fall kann die Maschine beispielsweise als Werkzeugmaschine ausgebildet sein. Alternativ kann es sich bei dem Maschinenelement 4 beispielsweise um einen Greifarm handeln. In diesem Fall kann die Maschine beispielsweise als Produktionsmaschine ausgebildet sein. Alternativ kann es sich bei dem Maschinenelement 4 um ein Teil eines Roboters, z.B. ein Armglied eines Roboter-Greifarms handeln. Entsprechend der Darstellung in FIG 1 ist das Maschinenelement 4 translatorisch verfahrbar. Das Maschinenelement 4 könnte aber auch bezüglich einer Rundachse (Rotationsachse) rotatorisch verdrehbar bzw. verschwenkbar sein.

Das Maschinenelement 4 wird über einen ersten Antrieb 1 bezüglich einer ersten Achse bewegt. Der ersten Antrieb 1 wirkt über eine Übersetzungseinrichtung 3 auf das Maschinenelement 4. Die Übersetzungseinrichtung 3 kann beispielsweise als Getriebe, als Gewindespindel oder als Kugelgewindetrieb ausgebildet sein. Auch andere Ausgestaltungen sind möglich. Eine Übersetzung i der Übersetzungseinrichtung 3 kann konstant sein oder von einem Lageistwert x des Maschinenelements 4 abhängen. Entsprechend der Darstellung in FIG 1 kann der ersten Antrieb 1 beispielsweise als rotatorischer Antrieb ausgebildet sein. Wenn in diesem Fall der ersten Antrieb 1 um einen beliebigen Winkel rotiert wird, beispielsweise um 360°, wird das Maschinenelement 4 im Falle einer translatorischen Bewegung des Maschinenelements 4 um eine Strecke verfahren, welche durch die Übersetzung i der Übersetzungseinrichtung 3 bestimmt ist, beispielsweise durch die Steigung einer Gewindespindel oder eines Kugelgewindetriebs. Auch wenn das Maschinenelement 4 bei einem Rotieren des ersten Antriebs 1 ebenfalls rotiert wird, stimmt bei einem Rotieren des ersten Antriebs 1 um einen bestimmten Drehwinkel, beispielsweise 20°, der Drehwinkel, um den das Maschinenelement 4 gedreht wird, nur ausnahmsweise - nämlich bei einer Übersetzung i von 1 - mit dem Drehwinkel überein, um den das Maschinenelement gedreht wird. Im Regelfall wird das Maschinenelement 1 um einen anderen Drehwinkel gedreht, beispielsweise bei einer Übersetzung i von 2,5 um 50°. In seltenen Ausnahmefällen kann der erste Antrieb 1 auch als Linearantrieb ausgebildet sein. Auch in diesem Fall wirkt er jedoch über die Übersetzungseinrichtung 3 auf das Maschinenelement 4.

Das Maschinenelement 4 wird weiterhin über einen zweiten Antrieb 2 ebenfalls bezüglich der ersten Achse bewegt. Der zweite Antrieb 2 wirkt direkt auf das Maschinenelement 4. "Direkt" bedeutet, dass der zweite Antrieb 2 ohne zwischengeordnete Übersetzungseinrichtung auf das Maschinenelement 4 wirkt. Der zweite Antrieb 2 kann beispielsweise entsprechend der Darstellung in FIG 1 als Linearantrieb ausgebildet sein, also als sich translatorisch bewegender Antrieb. Wenn in diesem Fall der zweite Antrieb 2 um eine beliebige Strecke verfahren wird, beispielsweise um 10 mm, wird auch das Maschinenelement 4 um genau die gleiche Strecke verfahren, gemäß dem genannten Beispiel also um 10 mm.

Der zweite Antrieb 2 kann aber bei anderen Ausgestaltungen der vorliegenden Erfindung als rotatorischer Antrieb ausgebildet sein, insbesondere als sogenannter Torquemotor. Wenn bei einer Ausgestaltung als rotatorischer Antrieb der zweite Antrieb 2 um einen beliebigen Winkel rotiert wird, beispielsweise um 20°, wird auch das Maschinenelement 4 um genau den gleichen Winkel bezüglich der Rotationsachse rotiert, gemäß dem genannten Beispiel also um 20°.

Bei dem ersten Maschinenelement 4 handelt es sich um jene Komponente der Maschine, die mittels der Antriebseinheit, die den ersten und den zweiten Antrieb umfasst, bezüglich der betreffenden Achse unmittelbar angetrieben wird. Es werden jedoch außer dem ersten Maschinenelement 4 auch alle weiteren Maschinenelemente, die dem ersten Maschinenelement 4 aus Sicht der betreffenden Antriebseinheit in der kinematischen Kette der Maschine nachfolgen und mit dem ersten Maschinenelement 4 direkt oder indirekt verbunden sind, ebenfalls durch die Bewegung des ersten Maschinenelements 4 mitbewegt.

Wird beispielsweise bei einem Roboter durch eine erste Antriebseinheit, die einen ersten und einen zweiten Antrieb umfasst, ein erstes Armglied des Roboterarms bezüglich einer ortsfesten Basis um eine erste (Rund-) Achse geschwenkt, so werden neben dem ersten Armglied (welches in diesem Fall dem ersten Maschinenelement 4 entspricht) auch alle weiteren, in der kinematischen Kette dem ersten Armglied nachfolgenden Komponenten (Maschinenelemente) des Roboterarms, wie weitere Armglieder und Antriebe, bis hin zum Endeffektor, um eben diese erste Achse geschwenkt. Aus Sicht der betreffenden Antriebseinheit bilden diese Komponenten in Summe die durch die Antriebseinheit bewegte "Last".

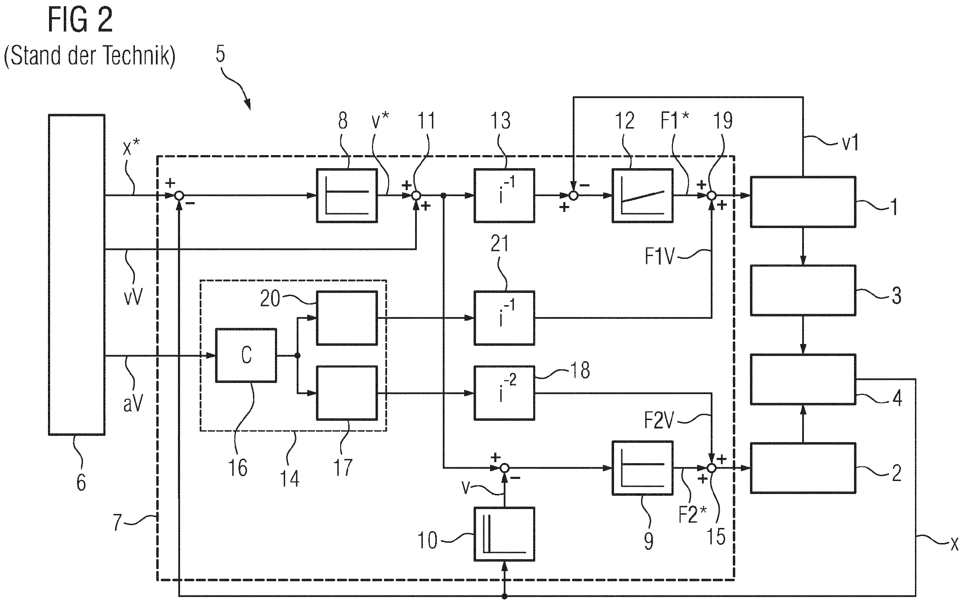

Der erste Antrieb 1 und der zweite Antrieb 2 werden von einer Steuereinrichtung 5 gesteuert. Die Steuereinrichtung 5 umfasst gemäß FIG 2 eine übergeordnete Steuerung 6 und eine Reglerstruktur 7. Die übergeordnete Steuerung 6 kann beispielsweise als numerische Steuerung, als Robotersteuerung oder als MC-Steuerung (motion control) ausgebildet sein. Die Ausgestaltung der Reglerstruktur 7 ist der Kerngegenstand der vorliegenden Erfindung.

Bei der Ausführungsform gemäß dem Stand der Technik nach FIG 2 (in Anlehnung an EP3625628A1) umfasst die Reglerstruktur 7 einen Lageregler 8. Der Lageregler 8 kann entsprechend der Darstellung in FIG 2 insbesondere als P-Regler ausgebildet sein, also als Proportional-Regler. Der Lageregler 8 nimmt von der übergeordneten Steuerung 6 einen Lagesollwert $x^*$ entgegen. Der Lageregler 8 nimmt weiterhin von einer Messeinrichtung (in den FIG nicht dargestellt) einen Lageistwert $x$ des Maschinenelements 4 entgegen. Das Entgegennehmen des Lagesollwerts $x^*$ und des Lageistwerts $x$ erfolgt mit einem Lageregeltakt. Mit jedem Lageregeltakt nimmt der Lageregler 8 also einen neuen Lagesollwert $x^*$ und einen neuen Lageistwert $x$ des Maschinenelements 4 entgegen. Der Lageregeltakt liegt meist im Bereich von etwa 1 ms oder etwas darunter, beispielsweise bei 250 ps, 500 ps, 1 ms oder 2 ms.

Der Lageregler 8 ermittelt anhand des jeweiligen Lagesollwerts $x^*$ und des jeweiligen Lageistwerts $x$ - insbesondere anhand der Differenz von jeweiligem Lagesollwert $x^*$ und jeweiligem Lageistwert $x$ - jeweils einen Geschwindigkeitssollwert $v^*$ für das Maschinenelement 4. Der Begriff "anhand" soll bedeuten, dass die in Verbindung mit dem Begriff "anhand" genannten Größen alle Größen sind, die als Variable in die Ermittlung der jeweils genannten ermittelten Größe eingehen. Im konkreten Beispiel ist also der jeweilige Geschwindigkeitssollwert $v^*$ zwar vom jeweiligen Lagesollwert $x^*$ und vom jeweiligen Lageistwert $x$ abhängig, nicht aber von anderen variablen Größen. Der Begriff "anhand" steht somit im Gegensatz zu den Begriffen "in Abhängigkeit von" und "unter Verwendung von". Diese Begriffe sollen bedeuten, dass die jeweils ermittelte Größe zwar von den jeweils genannten Eingangsgrößen abhängig ist, dass aber nicht ausgeschlossen ist, dass auch Abhängigkeiten von anderen variablen Größen bestehen. Den jeweils ermittelten Geschwindigkeitssollwert $v^*$ gibt der Lageregler 8 mit dem Lageregeltakt aus.

Gemäß FIG 2 umfasst die Reglerstruktur 7 weiterhin einen zweiten Geschwindigkeitsregler 9. Der zweite Geschwindigkeitsregler 9 kann beispielsweise entsprechend der Darstellung in FIG 2 als P-Regler ausgebildet sein. Der zweite Geschwindigkeitsregler 9 nimmt mit einem zweiten Geschwindigkeitsregeltakt jeweils die Differenz aus einem resultierenden Geschwindigkeitssollwert und einem Geschwindigkeitsistwert $v$ des Maschinenelements 4 entgegen. Das Ermitteln des resultierenden Geschwindigkeitssollwerts und des Geschwindigkeitsistwerts $v$ erfolgt mit einem zweite Geschwindigkeitsregeltakt. Mit jedem derartigen Takt nimmt der zweite Geschwindigkeitsregler 9 also eine Differenz eines neuen resultierenden Geschwindigkeitssollwertes und eines neuen Geschwindigkeitsistwertes $v$ des Maschinenelements 4 entgegen. Der zweite Geschwindigkeitsregeltakt ist (in zeitlicher Hinsicht) höchstens so groß wie der Lageregeltakt. Er kann aber auch einen kleineren Wert aufweisen, beispielsweise halb so groß wie der Lageregeltakt sein.

Anhand der Differenz des jeweiligen resultierenden Geschwindigkeitssollwerts und des jeweiligen Geschwindigkeitsistwerts v des Maschinenelements 4 ermittelt der zweite Geschwindigkeitsregler 9 mit dem zweite Geschwindigkeitsregeltakt einen jeweiligen zweiten Kraftsollwert F2* für den zweiten Antrieb 2. Der zweite Geschwindigkeitsregler 9 steuert den zweiten Antrieb 2 in Abhängigkeit von dem jeweils ermittelten zweiten Kraftsollwert F2* an.

Zum Ermitteln des jeweiligen Geschwindigkeitsistwerts v des Maschinenelements 1 kann die Reglerstruktur 7 beispielsweise einen Differenzierer 10 umfassen, dem der jeweilige Lageistwert x des Maschinenelements 4 zugeführt wird und der durch Differenzieren des jeweiligen Lageistwerts x des Maschinenelements 4 den jeweiligen Geschwindigkeitsistwert v des Maschinenelements 4 ermittelt. Alternativ kann der jeweilige Geschwindigkeitsistwert v des Maschinenelements 4 auf andere Weise ermittelt werden oder direkt messtechnisch erfasst werden.

Zum Ermitteln des jeweiligen resultierenden Geschwindigkeitssollwerts weist die Reglerstruktur 7 eine erste Ermittlungseinrichtung 11 auf. Die erste Ermittlungseinrichtung 11 nimmt vom Lageregler 8 den jeweiligen Geschwindigkeitssollwert v* entgegen und ermittelt unter Verwendung des jeweiligen Geschwindigkeitssollwerts v* den jeweiligen resultierenden Geschwindigkeitssollwert. Den jeweiligen resultierenden Geschwindigkeitssollwert gibt die erste Ermittlungseinrichtung 11 an den zweiten Geschwindigkeitsregler 9 aus. Die erste Ermittlungseinrichtung 11 arbeitet mit dem Lageregeltakt, dem ersten Geschwindigkeitsregeltakt oder einem zweiten Geschwindigkeitsregeltakt, auf den nachfolgend eingegangen wird.

Die Reglerstruktur 7 umfasst weiterhin einen ersten Geschwindigkeitsregler 12. Der ersten Geschwindigkeitsregler 12 kann beispielsweise entsprechend der Darstellung in FIG 2 als PI-Regler ausgebildet sein, also als Proportional-Integral-Regler. Die erste Ermittlungseinrichtung 11 gibt den jeweiligen resultierenden Geschwindigkeitssollwert nicht nur an den zweiten Geschwindigkeitsregler 9 aus, sondern auch an den ersten Geschwindigkeitsregler 12. Soweit erforderlich, wird in einem ersten Anpassungsblock 13 die Übersetzung i der Übersetzungseinrichtung 3 berücksichtigt. Der erste Geschwindigkeitsregler 12 nimmt mit dem ersten Geschwindigkeitsregeltakt jeweils die Differenz aus einem resultierenden Geschwindigkeitssollwert und einem Geschwindigkeitsistwert v1 des ersten Antriebs 1 entgegen. Der erste Geschwindigkeitsregeltakt ist (in zeitlicher Hinsicht) höchstens so groß wie der Lageregeltakt. Er kann aber auch einen kleineren Wert aufweisen, beispielsweise halb so groß wie der Lageregeltakt sein. In der Regel ist er gleich dem zweiten Geschwindigkeitsregeltakt. Der jeweilige Geschwindigkeitsistwert v1 des ersten Antriebs 1 kann sich vom jeweiligen Geschwindigkeitsistwert v des Maschinenelements 4 unterscheiden, weil die Erfassungsstelle für den Geschwindigkeitsistwert v1 des ersten Antriebs 1 und den Geschwindigkeitsistwert v des Maschinenelements 4 entsprechend der Darstellung in FIG 2 an unterschiedlichen Enden der Übersetzungseinrichtung 3 befinden.

Der ersten Geschwindigkeitsregler 12 ermittelt anhand (der Differenz) des jeweiligen resultierenden Geschwindigkeitssollwerts und des jeweiligen Geschwindigkeitsistwerts v1 des ersten Antriebs 1 mit dem ersten Geschwindigkeitsregeltakt einen jeweiligen ersten Kraftsollwert F1* für den ersten Antrieb 1. Der ersten Geschwindigkeitsregler 12 steuert den ersten Antrieb 1 in Abhängigkeit von dem jeweils ermittelten ersten Kraftsollwert F1* an. Indirekt steuert somit auch der Lageregler 8 den ersten Antrieb 1 in Abhängigkeit von dem jeweiligen Lagesollwert x* und dem jeweiligen Lageistwert x an.

Bei einer Ausgestaltung der Reglerstruktur 7 gemäß FIG 2 kann die erste Ermittlungseinrichtung 11 auch "entartet" sein. In diesem Fall ist der jeweilige resultierende Geschwindigkeitssollwert mit dem jeweiligen Geschwindigkeitssollwert v* identisch. Vorzugsweise nimmt die erste Ermittlungseinrichtung 11 jedoch entsprechend der Darstellung in FIG 2 mit ihrem Arbeitstakt auch einen jeweiligen Geschwindigkeits-Vorsteuerwert vV entgegen. Bei dem Arbeitstakt kann es sich um den Lageregeltakt oder um einen der Geschwindigkeitsregeltakte handeln. Der jeweilige Geschwindigkeits-Vorsteuerwert vV wird der ersten Ermittlungseinrichtung 11 von der übergeordneten Steuerung 6 vorgegeben. Die erste Ermittlungseinrichtung 11 ermittelt den jeweiligen resultierenden Geschwindigkeitssollwert als Summe des vom Lageregler 8 ermittelten jeweiligen Geschwindigkeitssollwerts v* und des jeweiligen Geschwindigkeit-Vorsteuerwerts vV.

Wie aus FIG 2 ersichtlich, weist die Reglerstruktur 7 eine zweite Ermittlungseinrichtung 14 auf. Diese nimmt mit einem Vorsteuertakt von der übergeordneten Steuerung 6 jeweils einen Beschleunigungs-Vorsteuerwert aV entgegen. Der Vorsteuertakt kann mit dem Lageregeltakt oder einem der Geschwindigkeitsregeltakte übereinstimmen. Alternativ kann der Vorsteuertakt aber auch einen kleineren Wert aufweisen, beispielsweise halb so groß wie der zweite Geschwindigkeitsregeltakt sein.

Die zweite Ermittlungseinrichtung 14 ermittelt anhand des jeweiligen Beschleunigungs-Vorsteuerwerts aV zumindest einen zweiten Kraft-Vorsteuerwert F2V für den zweiten Antrieb 2. Die zweite Ermittlungseinrichtung 14 gibt den jeweiligen zweiten Kraft-Vorsteuerwert F2V an eine zweite Additionseinrichtung 15 aus. Die zweite Additionseinrichtung 15 addiert den jeweiligen zweiten Kraft-Vorsteuerwert F2V zum jeweiligen zweiten Kraftsollwert F2*. Der zweite Antrieb 2 wird somit entsprechend der Summe des jeweiligen zweiten Kraft-Vorsteuerwerts F2V und des zweiten Kraftsollwerts F2* angesteuert.

Die zweite Ermittlungseinrichtung 14 weist weiterhin eine Anpassungseinrichtung 16 auf, die den jeweiligen Beschleunigungs-Vorsteuerwert aV in einen vorläufigen Kraft-Vorsteuerwert umsetzt. Die Anpassungseinrichtung 16 berücksichtigt die Masse bzw. die Trägheit des Maschinenelements 4. Im einfachsten Fall ist die Funktion der Anpassungseinrichtung 16 lediglich eine Skalierung mit einer geeignet gewählten Konstante C.

Sodann ermittelt die zweite Ermittlungseinrichtung 14 den jeweiligen zweiten Kraft-Vorsteuerwert F2V anhand des jeweiligen vorläufigen Kraft-Vorsteuerwerts. Insbesondere ist es möglich, dass die zweite Ermittlungseinrichtung 14 einen Hochpassfilter 17 implementiert, mittels dessen die zweite Ermittlungseinrichtung 14 den jeweiligen zweiten Kraft-Vorsteuerwert F2V durch Hochpassfilterung des jeweiligen vorläufigen Kraft-Vorsteuerwerts ermittelt. Soweit erforderlich, kann in einem zweiten Anpassungsblock 18 die Übersetzung i der Übersetzungseinrichtung 3 berücksichtigt werden.

Zusätzlich ermittelt die zweite Ermittlungseinrichtung 14 anhand des jeweiligen vorläufigen Kraft-Vorsteuerwerts einen jeweiligen ersten Kraft-Vorsteuerwert F1V für den ersten Antrieb 1. Dazu gibt die zweite Ermittlungseinrichtung 14 den jeweiligen ersten Kraft-Vorsteuerwert F1V an eine erste Additionseinrichtung 19 aus. Die erste Additionseinrichtung 19 bildet die Summe des jeweiligen ersten Kraft-Vorsteuerwerts F1V und des jeweiligen ersten Kraftsollwerts F1*. Der erste Antrieb 1 wird somit entsprechend der genannten Summe angesteuert.

Es ist möglich, dass der jeweilige erste Kraft-Vorsteuerwert F1V mit dem jeweiligen vorläufigen Kraft-Vorsteuerwert übereinstimmt. Vorteilhaft umfasst die zweite Ermittlungseinrichtung 14 jedoch einen Tiefpassfilter 20. Somit ermittelt die zweite Ermittlungseinrichtung 14 den jeweiligen ersten Kraft-Vorsteuerwert F1V durch Tiefpassfilterung des jeweiligen vorläufigen Kraft-Vorsteuerwerts. Weiterhin wird - analog zur Ermittlung des jeweiligen zweiten Kraft-Vorsteuerwerts F2V - auch für die Ermittlung des jeweiligen ersten Kraft-Vorsteuerwerts F1V in einem dritten Anpassungsblock 21 die Übersetzung i der Übersetzungseinrichtung 3 berücksichtigt.

Ein besonderes Merkmal der bekannten Reglerstruktur ist die Vorsteuerung der Beschleunigung, die eine dynamische Aufteilung mittels Tief- und Hochpassfilter für jeweils Getriebe- und Torquemotor vorsieht. Dieses Verfahren bietet jedoch wenig Freiheit bei der Dimensionierung des Torquemotors. Weil der Torquemotor im Verhältnis das größte Drehmoment umsetzen muss, ist er in der Regel das limitierende Element für die Achsbeschleunigung. Um dieselbe Beschleunigung wie mit dem untersetzten Getriebemotor fahren zu können, müsste der Torquemotor deutlich größer dimensioniert werden. Häufig ist dies mit dem zur Verfügung stehenden Bauraum jedoch nicht möglich.

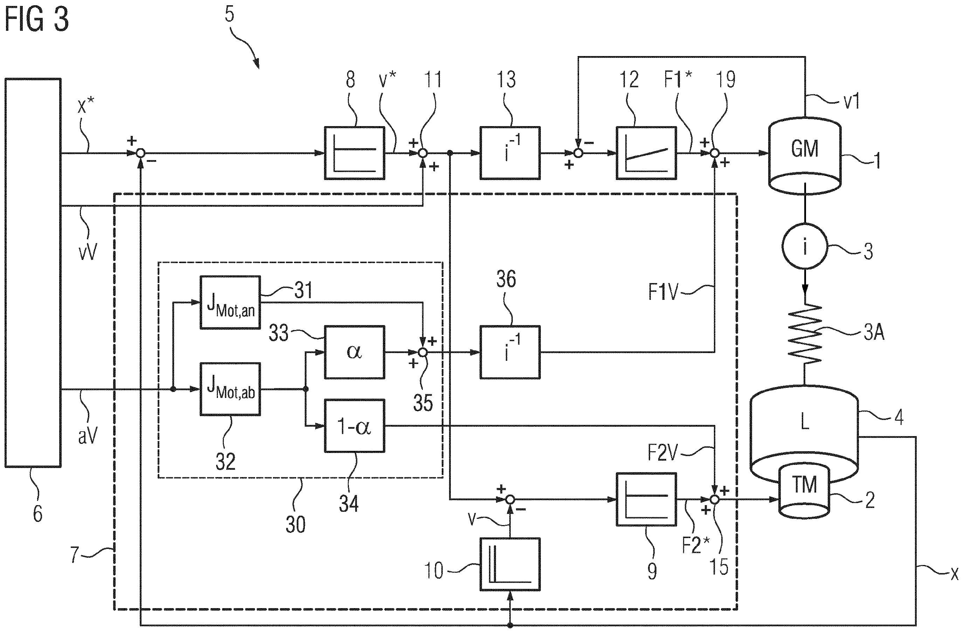

FIG 3 zeigt eine Reglerstruktur mit Steuerung gemäß der Erfindung. Im Unterschied zu FIG 2 sind hier die Komponenten 1 bis 4 etwas anders dargestellt, nämlich in einer üblichen Modelldarstellung. Der erste Antrieb 1 ist auch mit "GM" (Getriebemotor) bezeichnet, der zweite Antrieb 2 mit "TM" (Torquemotor) und das Maschinenelement 4 mit "L" (Last). Die Übersetzungseinrichtung 3 (auch als "i" für den Wert der Übersetzung bezeichnet) ist nun aufgeteilt in die Modell-Komponenten 3 und 3A, wobei die Komponente 3A als Feder dargestellt ist und im Modell die endliche Steifigkeit des Antriebsstranges, insbesondere des Getriebes 3 symbolisiert.

Im Unterschied zu der bekannten Reglerstruktur gemäß FIG 2 weist die erfindungsgemäße Reglerstruktur gemäß FIG 3 eine dritte Ermittlungseinrichtung 30 auf, die mit einem Vorsteuertakt jeweils einen Beschleunigungs-Vorsteuerwert aV entgegennimmt, anhand des jeweiligen Beschleunigungs-Vorsteuerwerts aV einen jeweiligen zweiten Kraft-Vorsteuerwert F2V für den zweiten Antrieb 2 ermittelt und den jeweiligen zweiten Kraft-Vorsteuerwert F2V an die zweite Additionseinrichtung 15 ausgibt, welche den jeweiligen zweiten Kraft-Vorsteuerwert F2V zum jeweiligen zweiten Kraftsollwert F2* addiert, so dass der zweite Antrieb 2 entsprechend der Summe des jeweiligen zweiten Kraft-Vorsteuerwerts F2V und des jeweiligen zweiten Kraftsollwerts F2* angesteuert wird.

Weiterhin ermittelt die dritte Ermittlungseinrichtung 30 anhand des jeweiligen vorläufigen Kraft-Vorsteuerwerts einen jeweiligen ersten Kraft-Vorsteuerwert F1V für den ersten Antrieb 3 und gibt den jeweiligen ersten Kraft-Vorsteuerwert F1V an eine erste Additionseinrichtung 19 aus, welche den jeweiligen ersten Kraft-Vorsteuerwert F1V zum jeweiligen ersten Kraftsollwert F1* addiert, so dass der erste Antrieb 1 entsprechend der Summe des jeweiligen ersten Kraft-Vorsteuerwerts F1V und des jeweiligen ersten Kraftsollwerts F1* angesteuert wird.

Weiterhin umfasst die dritte Ermittlungseinrichtung 30 eine erste Trägheitsermittlungseinrichtung 31, die eine auf die Getriebeantriebseite des Antriebsstrangs bezogene, erste Achsenträgheit $J_{Mot,an}$ ermittelt.

Weiterhin umfasst die dritte Ermittlungseinrichtung 30 eine zweite Trägheitsermittlungseinrichtung 32, die eine auf die Getriebeabtriebseite des Antriebsstrangs bezogene, zweite Achsenträgheit $J_{Mot,ab}$ ermittelt.

Dabei werden der jeweilige zweite Kraft-Vorsteuerwert F2V anhand der zweiten Achsenträgheit $J_{Mot,ab}$ und eines zweiten Skalierungsfaktors $(1 - \alpha)$ und der jeweilige erste Kraft-Vorsteuerwert F1V anhand der ersten Achsenträgheit $J_{Mot,an}$, der zweiten Achsenträgheit $J_{Mot,ab}$ und eines ersten Skalierungsfaktors $\alpha$ ermittelt.

Allgemein beschreibt $J_{mot}$ die Gesamtträgheit aus Sicht der Achse.

Die erste Achsenträgheit $J_{Mot,an}$ umfasst die Trägheiten des Getriebemotors 1, des Getriebes 3 und evtl. weiterer Getriebestufen (Vorstufe, Riemen, usw.).

$J_{Mot,an}$ ist auch die Trägheit, die aus Sicht des Getriebemotors 1 übrigbleibt, nachdem sich die Last dynamisch abgekoppelt hat.

Die zweite Achsenträgheit $J_{Mot,ab}$ umfasst die Trägheiten des Torquemotors 2 und der "Last". Dabei ist unter "Last" die Trägheit zu verstehen, die auf die Antriebseinheit über das von der Antriebseinheit angetriebene Maschinenelement 4 wirkt. Sie setzt sich aus allen Trägheiten der betrachteten kinematischen Kette mit Ausnahme der ersten Achsenträgheit $J_{Mot,an}$ zusammen. Sie umfasst demnach die Trägheit des Maschinenelements 4 und aller damit aus Sicht der Antriebseinheit entlang der kinematischen Kette nachfolgenden, direkt oder indirekt verbundenen Maschinenelemente, kurz der "Last".

Anstatt einer komplexen Aufteilung nach Frequenzbereichen gemäß der Ausführungsform nach FIG 2 wird gemäß der Erfindung das Drehmoment für die Beschleunigung der Last mittels Skalierungsfaktoren $\alpha 1$, $\alpha 2$ zwischen den Antrieben, insbesondere einem Torquemotor und einem Getriebemotor aufgeteilt. Der Wert der Skalierungsfaktoren bietet dabei einen Freiheitgrad, womit die Dynamik der Achse und die Größe des Direktantriebs (Torquemotors) skaliert werden können.

Insbesondere besteht zwischen den Skalierungsfaktoren der Zusammenhang $\alpha 1 + \alpha 2 = 1$ bzw. $\alpha 2 = 1 - \alpha 1$;

Durch diesen Zusammenhang muss lediglich ein Skalierungsfaktoren $\alpha$ bestimmt werden.

Mit dem Faktor $\alpha$ (bzw. $1 - \alpha$) wird gewählt, welcher Anteil der zweiten Achsenträgheit $J_{Mot,ab}$ durch den jeweiligen Motor kompensiert wird.

Aus dem Beschleunigungssollwert wird durch das Produkt mit einer Trägheit ($J_{Mot,an}$, $J_{Mot,ab}$) ein Drehmoment gebildet. Vorteilhaft wird das Drehmoment für die Beschleunigung des Antriebsstrangs (Getriebemotor und Getriebe) dem Getriebemotor zugeordnet und das Drehmoment für die Beschleunigung der Last wird zwischen Getriebemotor und Torquemotor aufgeteilt.

Aus dem Wert des Skalierungsfaktors $\alpha$ ergeben sich drei Fälle :

- $\alpha = 0$: Das Drehmoment für die Beschleunigung der Last wird dem Torquemotor allein zugeordnet. Dieser Fall ist mit Hinblick auf die Anregung der Eigenfrequenz optimal. Wird die Achse als Zweimassenschwinger approximiert, wird jede Seite des Schwingers optimal angesteuert und die Feder wird nie ausgelenkt. Somit ergibt sich keine Anregung der Eigenfrequenz. Nachteilig ist aber, dass diese Aufteilung den größten Torquemotor erfordert.

- $\alpha = 1$: Das Drehmoment für die Beschleunigung der Last wird dem Getriebemotor zugeordnet. Somit wird die Achse allein vom Getriebemotor beschleunigt. Der Torquemotor wird nur zur Dämpfung eingesetzt. In diesem Fall ist die Anregung der Eigenfrequenz maximal, aber der Torquemotor minimal groß.

- $0 < \alpha < 1$: Das Drehmoment für die Beschleunigung der Last wird zwischen Torquemotor und Getriebemotor aufgeteilt. Je kleiner der Wert von $\alpha$, desto geringer die Anregung der Eigenfrequenz und desto größer die Kosten für den Torquemotor.

Im Fall $\alpha > 0$ wird die Eigenfrequenz der Achse immer angeregt und es entsteht eine Schwingung. Für diese Fälle wird zusätzlich die dämpfende Wirkung des P-geregelten Torquemotors zur Schwingungsunterdrückung genutzt.

Besonders vorteilhaft ist bei der erfindungsgemäßen Lösung der zweite Geschwindigkeitsregler 9 als (reiner) P-Regler ausgeführt und enthält damit keinen I-Anteil. Dadurch muss der zweite Antrieb (Torquemotor) 2 kein Haltemoment aufnehmen und kann damit entsprechend kleiner dimensioniert werden. Auch auf eine aktive (Flüssigkeits-) Kühlung für den Torquemotor kann damit in der Regel verzichtet werden, womit der für den Torquemotor benötigte Bauraum zusätzlich verkleinert wird.

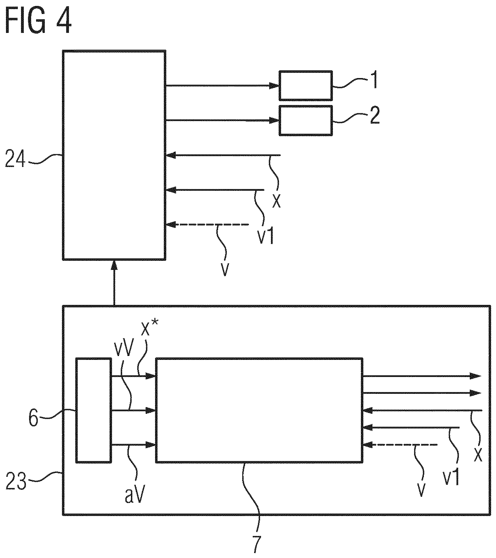

Es ist möglich, dass die Reglerstruktur 7 in Hardware aufgebaut ist. Vorzugsweise handelt es sich schon bei der Reglerstruktur 7 jedoch entsprechend der Darstellung in FIG 4 um einen Softwareblock. Der Softwareblock kann in diesem Fall Bestandteil eines Computerprogramms 23 sein. Das Computerprogramm 23 umfasst in diesem Fall Maschinencode, der von einer Steuereinrichtung 24 ausführbar ist. Die Steuereinrichtung 24 wird in diesem Fall mit dem Computerprogramm 23 programmiert. Sie realisiert in diesem Fall einheitlich sowohl die Funktionalität der übergeordneten Steuerung 6 als auch der Reglerstruktur 7.

Die Reglerstruktur 7 arbeitet also getaktet, d.h dass sie mit dem jeweiligen Takt ihre Variablen entgegennimmt. Sofern der Reglerstruktur 7 zusätzlich weitere Größen als Variable vorgegeben werden, werden auch diese Größen der Reglerstruktur 7 mit ihrem jeweiligen Takt vorgegeben. Als Variable kommen insbesondere der Lagesollwert $x^*$ und der Lageistwert sowie gegebenenfalls der Geschwindigkeitsistwert v des Maschinenelements 1, der Geschwindigkeits-Vorsteuerwert vV und der Beschleunigungs-Vorsteuerwert aV in Frage.

Die mittels der Reglerstruktur 7 ermittelten Größen können aber auch von Parametern abhängig sein. Parameter sind jedoch keine Variable. Parameter sind Größen, die der Reglerstruktur 7 im Rahmen ihrer Inbetriebsetzung vorab einmalig vorgegeben werden und die danach im laufenden Betrieb nicht mehr geändert werden. Parameter können beispielsweise Proportional-Verstärkungsfaktoren des Lagereglers 8 und der Geschwindigkeitsregler 9, 12 und eine Integrationszeitkonstante des zweiten Geschwindigkeitsreglers 12 sein.

Die Ausgestaltung der Reglerstruktur 7 wurde obenstehend in Verbindung mit einem translatorisch bewegten Maschinenelement 1, einem ebenfalls translatorisch bewegten ersten Antrieb 2 und einem rotatorisch bewegten zweiten Antrieb 3 erläutert. Die Reglerstruktur 7 ist jedoch in völlig analoger Weise auch realisierbar, wenn das Maschinenelement 1 rotatorisch bewegt wird und/oder der erste Antrieb 2 rotatorisch bewegt wird und/oder der zweite Antrieb 3 translatorisch bewegt wird. In diesem Fall müssten lediglich nach Bedarf translatorische Größen und korrespondierende rotatorische Größen verwendet werden, beispielsweise nach Bedarf Geschwindigkeitssollwerte oder Drehgeschwindigkeitssollwerte. Der strukturelle Aufbau der Reglerstruktur 7 wird hiervon nicht beeinflusst.

Weiterhin wurde die vorliegende Erfindung obenstehend in Verbindung mit einer übergeordneten Steuerung 6 und einer einzelnen Reglerstruktur 7 erläutert, wobei über die Reglerstruktur 7 ein einzelnes Maschinenelement 1 beeinflusst wird. Die vorliegende Erfindung ist jedoch ebenso anwendbar, wenn mehrere Maschinenelemente 1 über jeweils einen ersten Antrieb 2 und einen zweiten Antrieb 3 beeinflusst werden sollen. In diesem Fall kann die übergeordnete Steuerung 6 einheitlich für mehrere Maschinenelemente 1 vorhanden sein. Die jeweilige Reglerstruktur 7 ist jedoch individuell für das jeweilige Maschinenelement 1 vorhanden.

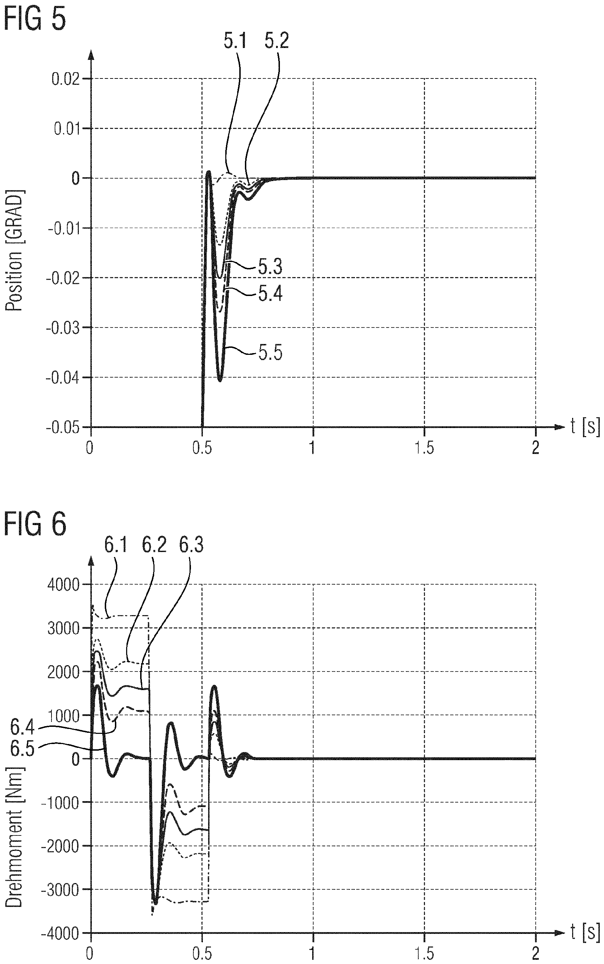

Die Figuren FIG 5 und FIG 6 zeigen, wie sich in Abhängigkeit des Skalierungsfaktors $\alpha$ (Alpha) das Positionierverhalten bei zunehmendem Alpha verschlechtert und das durchschnittliche Drehmoment des Torquemotors bei zunehmendem $\alpha$ verringert.

Insbesondere veranschaulichen FIG 5 das Positionieren für verschiedene Werte des Skalierungsfaktors $\alpha$ und FIG 6 den Drehmomentverlauf für den Torquemotor für verschiedene Werte des Skalierungsfaktors $\alpha$ über der Zeit t. Die ersichtlichen Kurven 5.1 und 6.1 zeigen den jeweiligen Verlauf für $\alpha = 0$, die Kurven 5.2 und 6.2 zeigen den jeweiligen Verlauf für $\alpha = 0,33$, die Kurven 5.3 und 6.3 zeigen den jeweiligen Verlauf für $\alpha = 0,5$, die Kurven 5.4 und 6.4 zeigen den jeweiligen Verlauf für $\alpha = 0,66$ und die Kurven 5.5 und 6.5 zeigen schließlich den jeweiligen Verlauf für $\alpha = 1$.

Wie veranschaulicht, können durch den Faktor $\alpha$ die Positioniergenauigkeit und Drehmomentbedarf vorteilhaft "eingestellt" werden.

Nachfolgend wird der Extremfall $\alpha = 1$ genauer betrachtet. In dieser Konfiguration liegt das Vorsteuermoment zu 100% auf dem Getriebemotor. Am Torquemotor wird kein Drehmoment vorgesteuert und er dient nur als Dämpfer.

In diesem Fall ist das durchschnittliche Drehmoment des Torquemotors am geringsten. Jedoch entsteht jeweils am Anfang einer Beschleunigungsphase eine Drehmomentspitze, vergleichbar mit der Höhe des Drehmoments bei anderen Werten von $\alpha$.

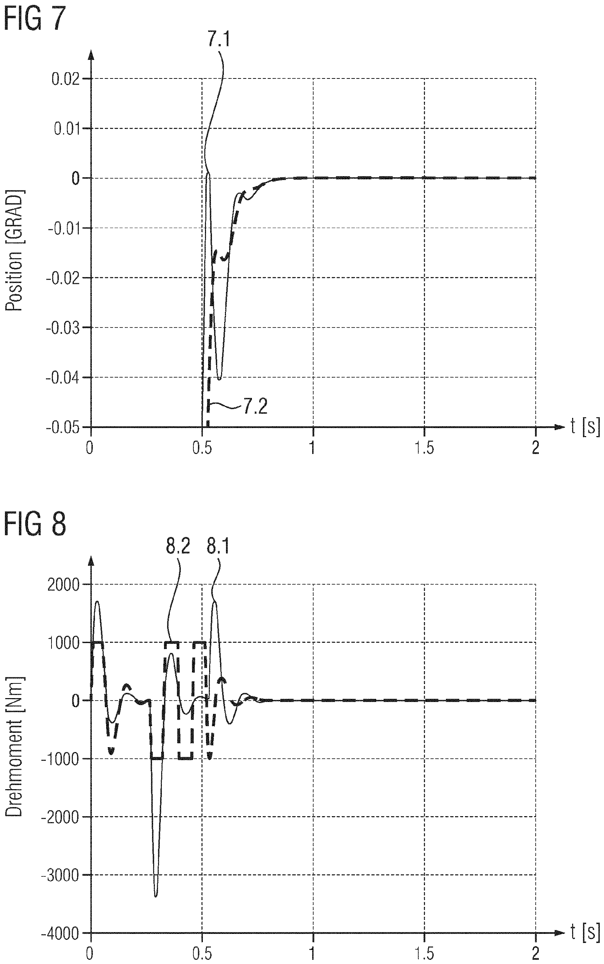

Die Figuren FIG 7 und 8 zeigen, dass sich das Positionierverhalten mit begrenztem Drehmoment nicht signifikant verschlechtert. Insbesondere zeigen die Kurven 7.1 und 8.1 die Position bzw. das Drehmoment über der Zeit für $\alpha = 1$ und ohne Begrenzung des Drehmoments und die Kurven 7.2 und 8.2 die Position bzw. das Drehmoment über der Zeit für $\alpha = 1$ für eine Begrenzung des Drehmoments auf 1000 Nm.

Weiterhin kann analysiert werden, dass der Unterschwinger beim Positionieren auf Grund des "Aufziehens" des Antriebsstrangs entsteht. Während der Beschleunigungsphase entstehen Beschleunigungskräfte auf die Last, die der Bewegung entgegenwirken.

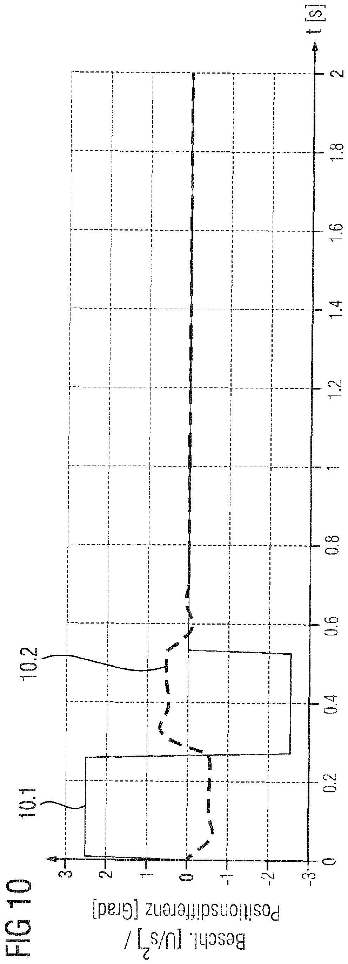

Es kann verifiziert werden, dass der Abstand zwischen dem Messsystem an dem Getriebemotor und dem Messsystem an der Last mit der Beschleunigung stark korreliert. Den Zusammenhang veranschaulicht FIG 10:

FIG 10 zeigt den Verlauf der Differenz zwischen den Messsystemen während der Beschleunigungsphase. Insbesondere veranschaulicht die Kurve 10.1 die Beschleunigung (in U/s$^2$) und die Kurve 10.2 die Differenz der von den beiden Messsystemen gelieferten Position (Positionsdifferenz) in Grad (°).

Die beschriebene Differenz der von den beiden Messsystemen gelieferten Position ist in der Literatur auch als "Intalk-Effekt" bekannt.

Um die unerwünschte Abweichung an der Last zu verhindern kann eine Kompensationsbewegung des Getriebemotors vorgesteuert werden. Eine solche "Intalk-Kompensation" wird im Sollwertkanal implementiert. Die Kompensationsbewegung resultiert aus dem Produkt der Lastträgheit geteilt durch die Steifigkeit des Antriebsstrangs. Ggf. kann ein Tiefpassfilter die Härte der Kompensationsbewegung etwas mildern.

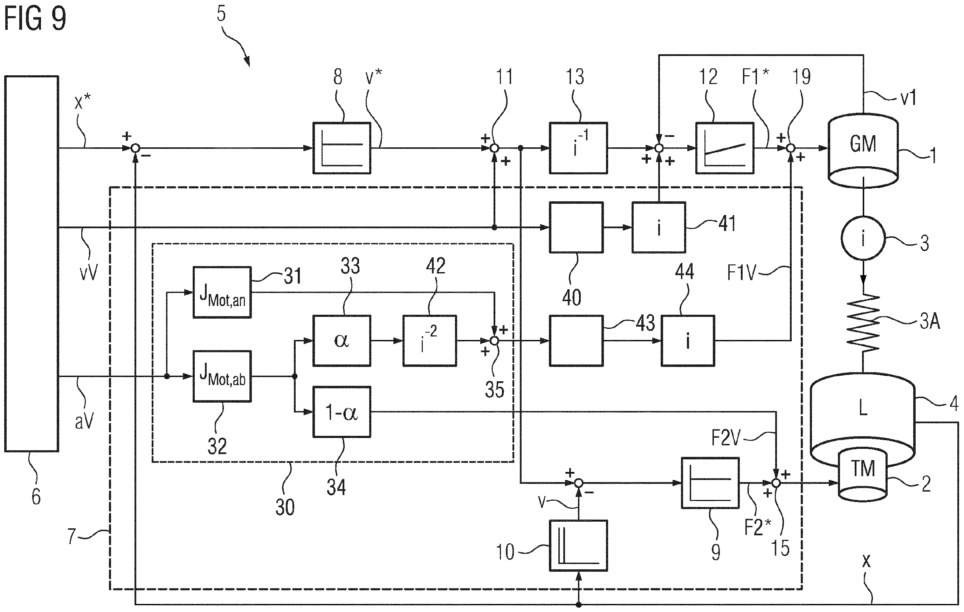

FIG 9 veranschaulicht eine mögliche Anpassung der Reglerstruktur gemäß FIG 3 zur Kompensation des Intalk-Effekts.

Ausgehend von der Reglerstruktur gemäß FIG 3 ist bei der Ausführungsform gemäß FIG 9 vorgesehen, dass zur Kompensation des Intalk-Effekts eine erste Intalk-Kompensations-Ermittlungseinrichtung 40 vorgesehen ist, die den Geschwindigkeits-Vorsteuerwert entgegennimmt und einen kompensierten Geschwindigkeits-Vorsteuerwert vV* ermittelt. Dieser wird vorteilhaft noch mittels eines vierten Anpassblocks 41 mit der Getriebeübersetzung i multipliziert, bevor der so ermittelte Wert ebenfalls dem Geschwindigkeitsregler 12 zugeführt wird.

Weiterhin ist bei der Reglerstruktur gemäß FIG 9 zur Kompensation des Intalk-Effekts ferner eine zweite Intalk-Kompensations-Ermittlungseinrichtung 43 vorgesehen, die den Ausgangswert des dritten Anpassblocks 35 entgegennimmt und nach einer Multiplikation mit der Getriebeübersetzung i mittels eines fünften Anpassblocks 44 einen kompensierten ersten Kraft-Vorsteuerwert F1V* ermittelt.

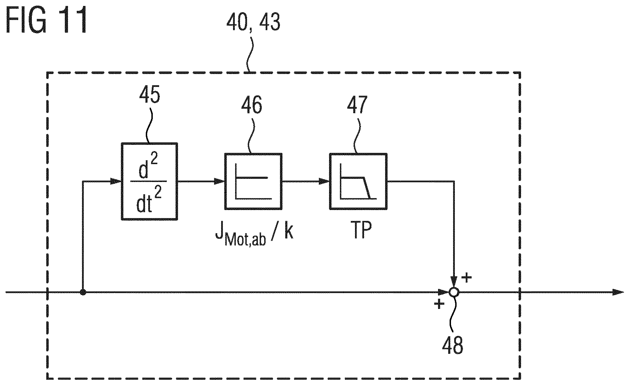

Eine mögliche Ausführungsform der Intalk-Kompensations-Ermittlungseinrichtung 40 bzw. 43 zeigt FIG 11. Wie ersichtlich ist, wird das Eingangssignal in die Intalk-Kompensations-Ermittlungseinrichtung einmal direkt und einmal zunächst nacheinander einem Zweifach-Differenzierer 45, einem Multiplizierer 46 mit dem Multiplikator $J_{Mot,ab}/k$ und optional einem Tiefpassfilter 47 und anschließend einem Addierer 48 zugeführt. Der Faktor k bezeichnet dabei die Federsteifigkeit des Antriebsstranges, insbesondere des Getriebes.

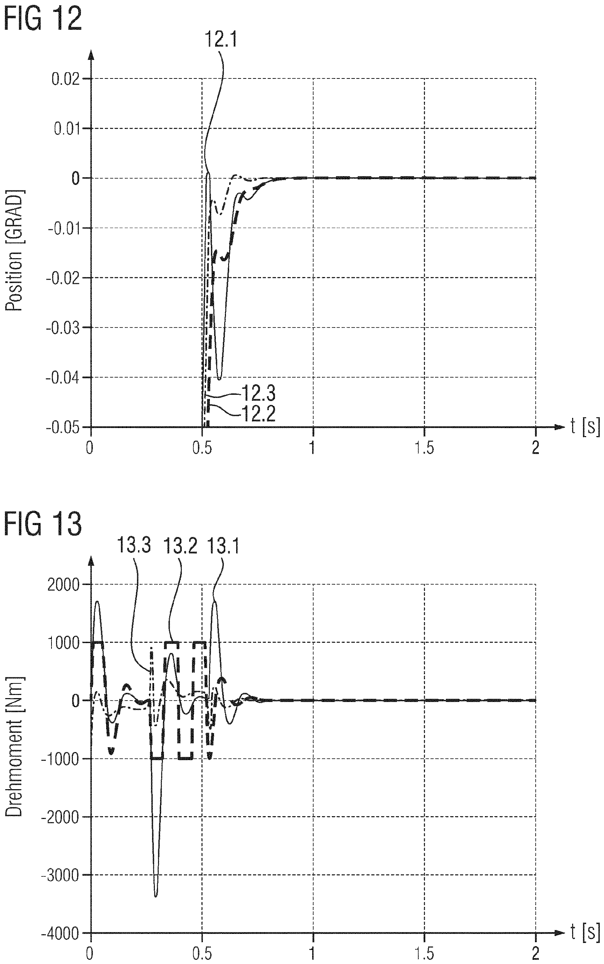

Die Figuren FIG 12 und FIG 13 veranschaulichen, dass das Positionierverhalten durch den Einsatz der gezeigten Intalk-Kompensation verbessert werden kann. Dabei erreicht das Drehmoment des Torquemotors nicht mehr die bisher limitierende Drehmomentgrenze.

Insbesondere veranschaulichen die Figuren FIG 12 und FIG 13 das Positionierverhalten und den Drehmomentverlauf für α = 1 ohne Intalk-Kompensation und ohne Drehmomentbegrenzung (Kurven 12.1 und 13.1), ohne Intalk-Kompensation und mit Drehmomentbegrenzung auf 1000 Nm (Kurven 12.2 und 13.2) sowie mit Intalk-Kompensation und mit Drehmomentbegrenzung auf 1000 Nm (Kurven 12.3 und 13.3)

Wie veranschaulicht, bewirkt die Intalk-Kompensation vorteilhaft eine Steigerung der Positioniergenauigkeit und eine Reduzierung des Drehmomentbedarfs.

Ein weiterer Vorteil dieser Erfindung ist die dämpfende Wirkung (Dämpfung), die mit dem Torquemotor erreicht werden kann. Diese dämpfende Wirkung kann insbesondere dadurch erreicht werden, dass der Drehzahlregler des Torquemotors - wie in FIG 3 veranschaulicht - allein ein P-Glied aufweist. Da der Getriebemotor für die Unterdrückung statischer Kräfte (Prozesskräfte, Gravitation) sorgt, kann der Drehzahlregler des Torquemotors "dämpfungsoptimal" eingestellt werden.

Alternativ könnten zur Dämpfung auch die Phasen des Torquemotors kurzgeschlossen werden. Der während der relativen Bewegung zwischen Rotor und Stator induzierte Strom wirkt nämlich ebenso als dämpfendes Drehmoment. Nur kann in diesem Fall die resultierende Dämpfung nicht eingestellt werden.

Ein weiterer Vorteil dieser Erfindung ergibt sich daraus, dass bei einem Verzicht auf den I-Anteil des Drehzahlreglers des Torquemotors durch den Motor keine statische Kraft ausgeglichen und der Motor nicht dauerhaft bestromt werden muss. Durch die Erfindung kann somit ein kleinerer Motor im Vergleich zu einer herkömmlichen Lösung verwendet werden. Dadurch werden der benötigte Bauraum für den Torquemotor und die Kosten für den Torquemotor reduziert. Weiterhin vorteilhaft kann bei der erfindungsgemäßen Lösung bei dem Torquemotor zumindest auf eine aktive Kühlung verzichtet werden. Durch den Wegfall eines Kühlaggregats (Lüfter, Flüssigkeitskühlung) wird der an der Maschine für den Torquemotor benötigte Bauraum zusätzlich reduziert. Auch die Integration des Torquemotors in die Maschine wird dadurch deutlich vereinfacht und gegebenenfalls kann damit sogar die Maschine insgesamt - bei gleichen techni-schen Daten (maximale Geschwindigkeit, Beschleuni-gung, Traglast/Kraft am TCP) - kleiner gebaut werden.

Weiterhin sind der Aufwand bzw. die Kosten für ein Kühlaggregat erheblich. Durch den möglichen Verzicht auf die (aktive) Kühlung werden die Kosten für den Motor bzw. die Maschine insgesamt signifikant gesenkt.

Die Erfindung kann besonders vorteilhaft bei Robotern verwendet werden, bei denen beide Antriebe auf eine Rundachse wirken. Denn besonders bei Robotern sind möglichst kleine Einbaumaße und ein möglichst geringes Gewicht für die Antriebe von besonderer Bedeutung.

Zusammenfassend liegt ein wesentlicher Vorteil der Erfindung darin begründet, dass die Dynamik einer Achse durch die Kombination aus zwei Antrieben in Verbindung mit der erfindungsgemäßen Reglerstruktur massiv gesteigert werden kann. Entsprechendes gilt selbstverständlich für eine Maschine insgesamt, die mehrere derartige Achsen, insbesondere in Form einer kinematischen Kette, umfasst. Durch geschickte Ansteuerung und Kompensation können weiterhin die Kosten für den abtriebsseitigen Torquemotor massiv gesenkt werden. Die starke Produktivitäts- und Genauigkeitssteigerung bei begrenzter Erhöhung der Kosten (gegenüber Achsen mit nur einem Antrieb) ist vor allem vorteilhaft für die Integration in Standard 6-Achs-Roboter und eröffnet damit neue Anwendungsfelder (Lasern, Wasserstrahlschneiden, Fräsen von Stahl). Aber auch für bestimmte Werkzeugmaschinen-Typen ist dies von Vorteil.

Besonders vorteilhaft können die erfindungsgemäße Reglerstruktur und/oder die übergeordnete Steuerung und/oder die betreffende Maschine mit einer Anzahl an Maschinenelementen 1, die insbesondere eine kinematische Kette bilden, auch in Form eines digitalen Zwillings implementiert sein. Dann ist es möglich, ganze Bewegungsabläufe mit der Maschine, insbesondere unter unterschiedlichen Lastverhältnissen, vor der realen Umsetzung erst in einer Simulation zu testen. Dies ist besonders dann mit lediglich geringfügigem zusätzlichen Aufwand möglich, wenn die Reglerstruktur - wie oben bereits erwähnt - ohnehin zumindest weitgehend in Form von Software realisiert ist.

Zusammengefasst betrifft die vorliegende Erfindung somit folgenden Sachverhalt:

Ein erster Antrieb 1 wirkt über eine Übersetzungseinrichtung 3 auf ein Maschinenelement 4, ein zweiter Antrieb 2 direkt. Ein Lageregler 8 nimmt einen Lagesollwert x* und einen Lageistwert x des Maschinenelements 1 entgegen und ermittelt anhand dieser Größen x*, x einen Geschwindigkeitssollwert v* für das Maschinenelement 4. Eine erste Ermittlungseinrichtung 11 nimmt den Geschwindigkeitssollwert v* entgegen und ermittelt unter Verwendung des Geschwindigkeitssollwerts v* einen re-sultierenden Geschwindigkeitssollwert. Ein zweiter Ge-schwindigkeitsregler 9 ermittelt anhand der Differenz des resultierenden Geschwindigkeitssollwerts und des Geschwindigkeitsistwerts v des Maschinenelements 1 einen zweiten Kraftsollwert F2* und steuert den zweiten Antrieb 2 in Abhängigkeit von diesem Kraftsollwert F2* an. Ein erster Geschwindigkeitsregler 12 ermittelt anhand der Differenz des resultierenden Geschwindigkeitssollwerts und des Geschwindigkeitsistwerts v des ersten Antriebs 1 einen ersten Kraftsollwert F1* und steuert den ersten Antrieb 1 in Abhängigkeit von diesem Kraftsollwert F1* an.

Vorteilhaft werden eine erste Achsenträgheit ($J_{Mot,an}$) und eine zweite Achsenträgheit ($J_{Mot,ab}$) ermittelt, die jeweils in unterschiedlicher, insbesondere einstellbarer Gewichtung in die Bestimmung des ersten Kraft-Vorsteuerwertes (F1V) und des zweiten Kraft-Vorsteuerwertes (F2V) eingehen.

Die vorliegende Erfindung weist viele Vorteile auf. Insbesondere arbeiten - bis auf die Anpassung der Übersetzung i der Übersetzungseinrichtung 3 - beide Geschwindigkeitsregler 9, 12 mit derselben Führungsgröße. Durch die Ausgestaltung des zweiten Geschwindigkeitsreglers 9 als Proportionalregler wird vermieden, dass sich für den zweiten Antrieb 2 eine statische Kraft aufbauen kann. Die Dämpfung von Schwingungen des Maschinenelements 4 wird hierdurch hingegen nicht negativ beeinflusst. Hierfür ist ein P-Regler völlig ausreichend. Die erfindungsgemäßen Lösungen sind robust und kostengünstig realisierbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Reglerstruktur für einen ersten und einen zweiten Antrieb (1, 2), wobei der erste Antrieb (1) über eine Übersetzungseinrichtung (3) auf ein Maschinenelement (4) wirkt und der zweite Antrieb (2) direkt auf das Maschinenelement (4) wirkt zur Bewegung des Maschinenelements (4) bezüglich einer Achse, wobei die Regelung des ersten Antriebs (1) mittels eines ersten Kraft-Vorsteuerwertes (F2V) und die Regelung des zweiten Antriebs (2) mittels eines zweiten Kraft-Vorsteuerwertes (F1V) erfolgt,

   **gekennzeichnet durch**,
   eine dritte Ermittlungseinrichtung (30), die eine erste Trägheitsermittlungseinrichtung (31) umfasst, die eine erste Achsenträgheit ($J_{Mot,an}$) ermittelt,
   wobei die dritte Ermittlungseinrichtung (30) eine zweite Trägheitsermittlungseinrichtung (32) umfasst, die eine zweite Achsenträgheit ($J_{Mot,ab}$) ermittelt und
   wobei die erste Achsenträgheit ($J_{Mot,an}$) und/oder die zweite Achsenträgheit ($J_{Mot,ab}$) jeweils in unterschiedlicher, insbesondere einstellbarer Gewichtung in die Bestimmung des ersten Kraft-Vorsteuerwertes (F1V) und des zweiten Kraft-Vorsteuerwertes (F2V) eingehen.

2. Reglerstruktur nach Anspruch 1,

   - wobei die Reglerstruktur einen Lageregler (8) umfasst, der mit einem Lageregeltakt jeweils die Differenz aus einem Lagesollwert (x*) und einem Lageistwert (x) des Maschinenelements (1) entgegennimmt und den ersten Antrieb (1) in Abhängigkeit von dem jeweiligen Lagesollwert (x*) und dem jeweiligen Lageistwert (x) ansteuert,
   - wobei die Reglerstruktur einen zweiten Geschwindigkeitsregler (9) umfasst, der mit einem ersten Geschwindigkeitsregeltakt jeweils die Differenz aus einem resultierenden Geschwindigkeitssollwert und einem Geschwindigkeitsistwert (v) des Maschinenelements (4) entgegennimmt, anhand des jeweiligen resultierenden Geschwindigkeitssollwerts und des jeweiligen Geschwindigkeitsistwerts (v) des Maschinenelements (4) jeweils einen zweiten Kraftsollwert (F2*) für den zweiten Antrieb (2) ermittelt und den zweiten Antrieb (2) in Abhängigkeit von dem jeweiligen zweiten Kraftsollwert (F2*) ansteuert,
   - wobei die Reglerstruktur eine erste Ermittlungseinrichtung (11) aufweist, die den jeweiligen resultierenden Geschwindigkeitssollwert ermittelt und an den ersten Geschwindigkeitsregler (9) ausgibt,
   - wobei der Lageregler (8) anhand der Differenz aus dem jeweiligen Lagesollwert (x*) und dem jeweiligen Lageistwert (x) jeweils einen Geschwindigkeitssollwert (v*) für das Maschinenelement (4) ermittelt und den jeweiligen Geschwindigkeitssollwert (v*) als Ausgangssignal ausgibt,
   - wobei die Reglerstruktur einen ersten Geschwindigkeitsregler (12) umfasst, der mit einem ersten Geschwindigkeitsregeltakt jeweils die Differenz aus dem resultierenden Geschwindigkeitssollwert und einem Geschwindigkeitsistwert (v1) des ersten Antriebs (1) entgegennimmt, anhand der Differenz aus dem jeweiligen resultierenden Geschwindigkeitssollwert und dem jeweiligen Geschwindigkeitsistwert (v1) des ersten Antriebs (1) jeweils einen ersten Kraftsollwert (F1*) für den ersten Antrieb (1) ermittelt und den ersten Antrieb (1) in Abhängigkeit von dem jeweiligen ersten Kraftsollwert (F1*) ansteuert,
   - wobei die erste Ermittlungseinrichtung (11) den jeweiligen Geschwindigkeitssollwert (v*) entgegennimmt und unter Verwendung des jeweiligen Geschwindigkeitssollwerts (v*) den resultierenden Geschwindigkeitssollwert ermittelt,
   - wobei die erste Ermittlungseinrichtung (11) den jeweiligen resultierenden Geschwindigkeitssollwert zusätzlich zum ersten Geschwindigkeitsregler (9) auch an den zweiten Geschwindigkeitsregler (12) ausgibt,
   - wobei die Reglerstruktur eine dritte Ermittlungseinrichtung (30) aufweist, die mit einem Vorsteuertakt jeweils einen Beschleunigungs-Vorsteuerwert (aV) entgegennimmt, anhand des jeweiligen Beschleunigungs-Vorsteuerwerts (aV) einen jeweiligen zweiten Kraft-Vorsteuerwert (F2V) für den zweiten Antrieb (2) ermittelt und den jeweiligen zweiten Kraft-Vorsteuerwert (F2V) an eine zweite Additionseinrichtung (15) ausgibt, welche den jeweiligen zweiten Kraft-Vorsteuerwert (F2V) zum jeweiligen zweiten Kraftsollwert (F2\*) addiert, so dass der zweite Antrieb (2) entsprechend der Summe des jeweiligen zweiten Kraft-Vorsteuerwerts (F2V) und des jeweiligen zweiten Kraftsollwerts (F2\*) angesteuert wird,

wobei die dritte Ermittlungseinrichtung (30) anhand des jeweiligen vorläufigen Kraft-Vorsteuerwerts einen jeweiligen ersten Kraft-Vorsteuerwert (F1V) für den ersten Antrieb (1) ermittelt und den jeweiligen ersten Kraft-Vorsteuerwert (F1V) an eine erste Additionseinrichtung (19) ausgibt, welche den jeweiligen ersten Kraft-Vorsteuerwert (F1V) zum jeweiligen ersten Kraftsollwert (F1\*) addiert, so dass der erste Antrieb (1) entsprechend der Summe des jeweiligen ersten Kraft-Vorsteuerwerts (F1V) und des jeweiligen ersten Kraftsollwerts (F1\*) angesteuert wird,

wobei der jeweilige erste Kraft-Vorsteuerwert (F1V) anhand der ersten Achsenträgheit ($J_{Mot,an}$), der zweiten Achsenträgheit ($J_{Mot,ab}$) und eines ersten Skalierungsfaktors ($\alpha$) ermittelt wird und

wobei der jeweilige zweite Kraft-Vorsteuerwert (F2V) anhand der zweiten Achsenträgheit ($J_{Mot,ab}$) und eines zweiten Skalierungsfaktors ($1 - \alpha$) ermittelt wird.

3. Reglerstruktur nach Anspruch 2,
wobei der erste Skalierungsfaktor ($\alpha$) und der zweite Skalierungsfaktor ($1 - \alpha$) in Summe 1 ergeben.

4. Reglerstruktur nach einem der vorherigen Ansprüche,
wobei die erste Ermittlungseinrichtung (11) weiterhin einen jeweiligen Geschwindigkeits-Vorsteuerwert (vV) entgegennimmt und den jeweils resultierenden Geschwindigkeitssollwert als Summe des jeweiligen Geschwindigkeitssollwerts (v\*) und des jeweiligen Geschwindigkeit-Vorsteuerwerts (vV) ermittelt.

5. Reglerstruktur nach einem der vorherigen Ansprüche,
wobei zur Kompensation eines Intalk-Effekts eine erste Intalk-Kompensations-Ermittlungseinrichtung (40) vorgesehen ist, die den Geschwindigkeits-Vorsteuerwert (vV) entgegennimmt und einen kompensierten Geschwindigkeits-Vorsteuerwert (vV\*) ermittelt.

6. Reglerstruktur nach einem der vorherigen Ansprüche,
wobei zur Kompensation des Intalk-Effekts eine zweite Intalk-Kompensations-Ermittlungseinrichtung (41) vorgesehen ist, die einen kompensierten ersten Kraft-Vorsteuerwert (F1V\*) ermittelt.

7. Reglerstruktur nach Anspruch 5 oder 6,
wobei ein vierter Anpassblock (41) vorhanden ist zur Anpassung des kompensierten Geschwindigkeits-Vorsteuerwertes (vV\*) an eine Getriebeübersetzung (i) und/oder dass ein fünfter Anpassblock (44) vorhanden ist zur Anpassung des kompensierten ersten Kraft-Vorsteuerwertes (F1V\*) an die Getriebeübersetzung (i).

8. Reglerstruktur nach einem der vorherigen Ansprüche,
wobei der zweite Geschwindigkeitsregler (9) als P-Regler ausgebildet ist.

9. Steuereinrichtung für einen ersten und einen zweiten Antrieb (2, 3), wobei der erste Antrieb (1) über eine Übersetzungseinrichtung (3) auf ein Maschinenelement (1) wirkt und der zweite Antrieb (2) direkt auf das Maschinenelement (4) wirkt,

- wobei die Steuereinrichtung eine übergeordnete Steuereinrichtung (6) und eine Reglerstruktur (7) aufweist,
- wobei die übergeordnete Steuereinrichtung (6) der Reglerstruktur (7) mit einem Lageregeltakt Lagesollwerte (x\*) vorgibt,

**dadurch gekennzeichnet,**
**dass** die Reglerstruktur (7) als Reglerstruktur (7) nach einem der obigen Ansprüche ausgebildet ist.

10. Maschine,

- wobei die Maschine ein Maschinenelement (4), einen ersten Antrieb (1), einen zweiten Antrieb (2) und eine Übersetzungseinrichtung (3) aufweist,
- wobei der erste Antrieb (1) über die Übersetzungseinrichtung (3) auf das Maschinenelement (4) wirkt und der zweite Antrieb (2) direkt auf das Maschinenelement (4) wirkt,
- wobei der erste Antrieb (1) und der zweite Antrieb (2) von einer Steuereinrichtung (24) nach Anspruch 9 gesteuert werden.

11. Maschine nach Anspruch 10,
wobei die Maschine als Werkzeugmaschine, als Produktionsmaschine oder als Roboter ausgebildet ist.

12. Maschine nach Anspruch 10 oder 11,
wobei der zweite Antrieb (2) nicht mit einem Kühlaggregat zur aktiven Kühlung versehen oder verbunden ist.

13. Verfahren zur Regelung einer Antriebseinheit mit einem ersten und einem zweiten Antrieb (1, 2), wobei der erste Antrieb (1) über eine Übersetzungseinrichtung (3) auf ein Maschinenelement (4) wirkt und der zweite Antrieb (2) direkt auf das Maschinenelement (4) wirkt zur Bewegung des Maschinenelements (4) bezüglich einer Achse,

wobei die Regelung des ersten Antriebs (1) mittels eines ersten Kraft-Vorsteuerwertes (F1V) und die Regelung des zweiten Antriebs mittels eines zweiten Kraft-Vorsteuerwertes (F2V) erfolgt,

**dadurch gekennzeichnet,**

**dass** eine erste Achsenträgheit ($J_{Mot,an}$) ermittelt wird und eine zweite Achsenträgheit ($J_{Mot,ab}$) ermittelt wird,

wobei die erste Achsenträgheit ($J_{Mot,an}$) und/oder die zweite Achsenträgheit ($J_{Mot,ab}$) jeweils in unterschiedlicher, insbesondere einstellbarer Gewichtung in die Bestimmung des ersten Kraft-Vorsteuerwertes (F1V) und des zweiten Kraft-Vorsteuerwertes (F2V) eingehen.

14. Verfahren zur Regelung eines ersten und eines zweiten Antriebs (1, 2) nach Anspruch 13,

- wobei ein Lageregler (8) mit einem Lageregeltakt jeweils die Differenz aus einem Lagesollwert (x*) und einem Lageistwert (x) des Maschinenelements (4) entgegennimmt und den ersten Antrieb (1) in Abhängigkeit von dem jeweiligen Lagesollwert (x*) und dem jeweiligen Lageistwert (x) ansteuert,

- wobei ein zweiter Geschwindigkeitsregler (9), mit einem ersten Geschwindigkeitsregeltakt jeweils die Differenz aus einem resultierenden Geschwindigkeitssollwert und einem Geschwindigkeitsistwert (v) des Maschinenelements (4) entgegennimmt, anhand des jeweiligen resultierenden Geschwindigkeitssollwerts und des jeweiligen Geschwindigkeitsistwerts (v) des Maschinenelements (4) jeweils einen zweiten Kraftsollwert (F2*) für den zweiten Antrieb (2) ermittelt und den zweiten Antrieb (2) in Abhängigkeit von dem jeweiligen zweiten Kraftsollwert (F2*) ansteuert,

- wobei eine erste Ermittlungseinrichtung (11) den jeweiligen resultierenden Geschwindigkeitssollwert ermittelt und an den ersten Geschwindigkeitsregler (9) ausgibt,

- wobei der Lageregler (8) anhand der Differenz aus dem jeweiligen Lagesollwert (x*) und dem jeweiligen Lageistwert (x) jeweils einen Geschwindigkeitssollwert (v*) für das Maschinenelement (4) ermittelt und den jeweiligen Geschwindigkeitssollwert (v*) als Ausgangssignal ausgibt,

- wobei ein erster Geschwindigkeitsregler (12) mit einem ersten Geschwindigkeitsregeltakt jeweils die Differenz aus dem resultierenden Geschwindigkeitssollwert und einem Geschwindigkeitsistwert (v1) des ersten Antriebs (1) entgegennimmt, anhand der Differenz aus dem jeweiligen resultierenden Geschwindigkeitssollwert und dem jeweiligen Geschwindigkeitsistwert (v1) des ersten Antriebs (1) jeweils einen ersten Kraftsollwert (F1*) für den ersten Antrieb (1) ermittelt und den ersten Antrieb (1) in Abhängigkeit von dem jeweiligen ersten Kraftsollwert (F1*) ansteuert,

- wobei die erste Ermittlungseinrichtung (11) den jeweiligen Geschwindigkeitssollwert (v*) entgegennimmt und unter Verwendung des jeweiligen Geschwindigkeitssollwerts (v*) den resultierenden Geschwindigkeitssollwert ermittelt,

- wobei die erste Ermittlungseinrichtung (11) den jeweiligen resultierenden Geschwindigkeitssollwert zusätzlich zum ersten Geschwindigkeitsregler (9) auch an den zweiten Geschwindigkeitsregler (12) ausgibt,

- wobei die dritte Ermittlungseinrichtung (30) anhand des jeweiligen vorläufigen Kraft-Vorsteuerwerts einen jeweiligen ersten Kraft-Vorsteuerwert (F1V) für den ersten Antrieb (1) ermittelt und den jeweiligen ersten Kraft-Vorsteuerwert (F1V) an eine erste Additionseinrichtung (19) ausgibt, welche den jeweiligen ersten Kraft-Vorsteuerwert (F1V) zum jeweiligen ersten Kraftsollwert (F1*) addiert, so dass der erste Antrieb (1) entsprechend der Summe des jeweiligen ersten Kraft-Vorsteuerwerts (F1V) und des jeweiligen ersten Kraftsollwerts (F1*) angesteuert wird,

- wobei der jeweilige erste Kraft-Vorsteuerwert (F1V) anhand der ersten Achsenträgheit ($J_{Mot,an}$), der zweiten Achsenträgheit ($J_{Mot,ab}$) und eines ersten Skalierungsfaktors ($\alpha$) ermittelt wird und

- wobei der jeweilige zweite Kraft-Vorsteuerwert (F2V) anhand der zweiten Achsenträgheit ($J_{Mot,ab}$) und eines zweiten Skalierungsfaktors ($1 - \alpha$) ermittelt wird.

15. Verfahren nach Anspruch 14,
wobei der erste Skalierungsfaktor ($\alpha$) und der zweite Skalierungsfaktor ($1 - \alpha$) in Summe 1 ergeben.

16. Verfahren nach Anspruch 14 oder 15,
wobei die erste Ermittlungseinrichtung (11) weiterhin einen jeweiligen Geschwindigkeits-Vorsteuerwert (vV) entgegennimmt und den jeweils resultierenden Geschwindigkeitssollwert als Summe des jeweiligen Geschwindigkeitssollwerts (v*) und des jeweiligen Geschwindigkeit-Vorsteuerwerts (vV) ermittelt.

17. Verfahren nach einem der Ansprüche 13 bis 16,
wobei zur Kompensation eines Intalk-Effekts eine erste Intalk-Kompensations-Ermittlungseinrichtung (40) vorgesehen ist, die den Geschwindigkeits-Vorsteuerwert (vV) entgegennimmt und einen kompensierten Geschwindigkeits-Vorsteuerwert (vV*) ermittelt.

18. Verfahren nach einem der Ansprüche 13 bis 17, wobei zur Kompensation des Intalk-Effekts eine zweite Intalk-Kompensations-Ermittlungseinrichtung (41) vorgesehen ist, die einen kompensierten ersten Kraft-Vorsteuerwert (F1V*) ermittelt.

19. Verfahren nach Anspruch 17 oder 18, wobei ein vierter Anpassblock (41) vorhanden ist zur Anpassung des kompensierten Geschwindigkeits-Vorsteuerwertes (vV*) an eine Getriebeübersetzung (i) und/oder dass ein fünfter Anpassblock (44) vorhanden ist zur Anpassung des kompensierten ersten Kraft-Vorsteuerwertes (F1V*) an die Getriebeübersetzung (i).

FIG 1

FIG 2
(Stand der Technik)

FIG 3

FIG 4

FIG 5

FIG 6

FIG 7

FIG 8

FIG 9

EP 4 462 202 A1

FIG 10

FIG 11

FIG 12

FIG 13

Europäisches
Patentamt

European
Patent Office

Office européen
des brevets

# EUROPÄISCHER RECHERCHENBERICHT

**Nummer der Anmeldung**

EP 23 17 2628

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 3 625 628 B1 (SIEMENS AG [DE]) 31. März 2021 (2021-03-31) | 1-4,8-16 | INV. G05B19/19 B23Q15/24 |
| A | * das ganze Dokument * | 5-7, 17-19 | |
| | ----- | | |
| Y | EP 0 604 672 A1 (SIEMENS AG [DE]) 6. Juli 1994 (1994-07-06) | 1-4,8-16 | |
| A | * Seite 2, Zeile 31 – Seite 4, Zeile 35 * | 5-7, 17-19 | |
| | ----- | | |
| A | EP 3 144 754 A1 (SIEMENS AG [DE]) 22. März 2017 (2017-03-22) * Absatz [0011] – Absatz [0029] * * Absatz [0036] – Absatz [0048] * | 1,13 | |
| | ----- | | |

**RECHERCHIERTE SACHGEBIETE (IPC)**

G05B
B23Q

Der vorliegende Recherchenbericht wurde für alle Patentansprüche erstellt

| Recherchenort | Abschlußdatum der Recherche | Prüfer |
|---|---|---|
| Den Haag | 24. Oktober 2023 | Patsiopoulos, N |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.........................................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 2628

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2023

| Im Recherchenbericht angeführtes Patentdokument | Datum der Veröffentlichung | Mitglied(er) der Patentfamilie | Datum der Veröffentlichung |
|---|---|---|---|
| EP 3625628 B1 | 31-03-2021 | CN 110998462 A | 10-04-2020 |
| | | EP 3570124 A1 | 20-11-2019 |
| | | EP 3625628 A1 | 25-03-2020 |
| | | US 2020159189 A1 | 21-05-2020 |
| | | WO 2019219398 A1 | 21-11-2019 |
| EP 0604672 A1 | 06-07-1994 | KEINE | |
| EP 3144754 A1 | 22-03-2017 | CN 108027600 A | 11-05-2018 |
| | | EP 3144754 A1 | 22-03-2017 |
| | | EP 3329335 A1 | 06-06-2018 |
| | | JP 6700380 B2 | 27-05-2020 |
| | | JP 2018529165 A | 04-10-2018 |
| | | US 2018259933 A1 | 13-09-2018 |
| | | WO 2017045920 A1 | 23-03-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2174748 A1
- US 20100171458 A1
- DE 102014005664 B3
- EP 2954986 A1
- EP 3625628 A1